# EUROPEAN PATENT APPLICATION

(11) **EP 4 270 582 A1**
(43) Date of publication of application: **01.11.2023**
(21) Application number: 21911599.5
(22) Date of filing: 24.12.2021
(51) Int. Cl.: H01M 10/0567, H01M 10/0569, H01M 10/052

(54) **ELECTROLYTE AND SECONDARY BATTERY COMPRISING SAME**

(30) Priority: 24.12.2020 KR 20200183533; 23.12.2021 KR 20210185801
(71) Applicant: Soulbrain Co., Ltd., Seongnam-si, Gyeonggi-do 13486 (KR)
(72) Inventor: CHOI, Ji Young, Seongnam-si, Gyeonggi-do 13486 (KR); KIM, Min Goo, Seongnam-si, Gyeonggi-do 13486 (KR); LEE, Sang Ho, Seongnam-si, Gyeonggi-do 13486 (KR); KANG, Wan Chul, Seongnam-si, Gyeonggi-do 13486 (KR); YUN, Jong Cheol, Seongnam-si, Gyeonggi-do 13486 (KR); HAN, Ji Seong, Seongnam-si, Gyeonggi-do 13486 (KR); JANG, Min Jung, Seongnam-si, Gyeonggi-do 13486 (KR)
(74) Representative: Dehns
(86) International application number: PCT/KR2021/019785
(87) International publication number: WO 2022/139534

(57) **Abstract**

The present invention relates to a novel electrolyte and a secondary battery including the same. The present invention has an effect of providing a secondary battery having improved charging efficiency and output due to reduced charging resistance and having excellent long-term lifespan and high-temperature capacity retention rate.

## Description

### [Technical Field]

The present invention relates to an electrolyte for batteries and a secondary battery including the same, and more particularly, to an electrolyte capable of improving the charging efficiency and output of batteries, long-term storage, and increasing capacity retention rate at high temperatures and a secondary battery including the same.

### [Background Art]

In a lithium secondary battery, an electrolyte contained between a cathode and an anode enables smooth movement of lithium ions. Electric energy may be easily used according to the method in which electricity is generated or consumed by oxidation-reduction reaction according to insertion and desorption at the cathode and anode.

Recently, environmental regulations have been strengthened worldwide, and interest in the environment has increased. Accordingly, interest in eco-friendly vehicles that can replace fossil fuel vehicles that cause air pollution is also increasing. Accordingly, domestic and foreign battery industries are actively developing automobile batteries.

To use batteries in automobiles, the output and capacity of the batteries must be significantly increased. In addition, the output of the batteries should be improved at high and low temperatures according to various weather conditions, and the problem of resistance increase should be solved. Considering that automobiles are used outdoors regardless of the season, batteries with improved long-term charging and capacity retention rate in various environments are required.

### [Related Art Documents]

### [Patent Documents]

JP 2008-300126 A
KR 10-1586199 B1

### [Disclosure]

### [Technical Problem]

Therefore, the present invention has been made in view of the above problems, and it is one object of the present invention to provide an electrolyte including novel electrolyte additives.

It is another object of the present invention to provide a secondary battery having an increased output due to reduced charging resistance, being capable of long-term storage due to improved recovery capacity at high temperatures, and having excellent lifespan retention rate at high temperatures.

The above and other objects can be accomplished by the present invention described below.

### [Technical Solution]

In accordance with one aspect of the present invention, provided is an electrolyte including one or more selected from among compounds represented by Chemical Formulas 1 to 6 below: 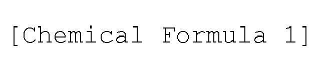 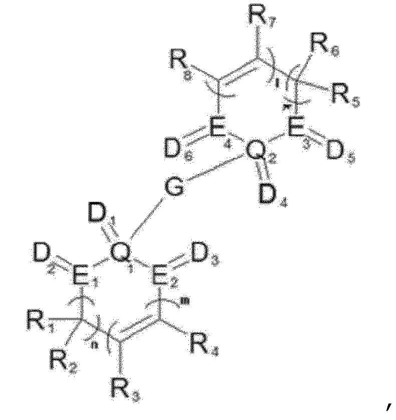
wherein, in Chemical Formula 1, G is -O-, -ORₐ-, - N(R_{b})-, -R_{c}-N(R_{d})-Rₑ-, -R_{f}(NR_{g}Rₕ)-, or -Rᵢ-; Rₐ, R_{c}, Rₑ, R_{f}, and Rᵢ are independently a linear or branched alkylene group having 1 to 10 carbon atoms; R_{b}, R_{d}, R_{g}, and Rₕ are independently hydrogen or a linear or branched alkyl group having 1 to 10 carbon atoms; Q₁ and Q₂ are independently phosphorus (P), sulfur (S), or arsenic (As); D₁, D₁, D₃, D₄, D₅, and D₆ are independently oxygen (=O) or one or two unshared electron pairs; E₁, E₂, E₃, or E₄ is oxygen or carbon, wherein, when D₂, D₃, D₅, or D₆ is oxygen, E₁, E₂, E₃, or E₄ bonded thereto is carbon; R₁, R₂, R₃, R₄, R₅, R₆, R₇, and R₈ are independently hydrogen, a linear or branched alkyl group having 1 to 10 carbon atoms, an alkenyl group, an alkynyl group, an alkoxy group, an alkoxycarbonyl group, or an alkoxyalkyl group; optionally, R₃ and R₄ or R₇ and R₈ may be bonded to each other to form a ring;
n and k are independently integers from 0 to 5; m and l are independently 0 or 1; and at least one of n and m and at least one of k and l are nonzero. 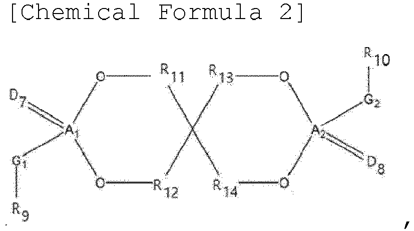
wherein, in Chemical Formula 2, A₁ and A₂ are independently phosphorus (P) or sulfur (S); D₇ and D₈ are independently oxygen (=O) or an unshared electron pair; G₁ and G₂ are independently -O- or -CH₂-; R₉ and R₁₀ are independently a linear or branched alkyl group having 1 to 20 carbon atoms; and R₁₁, R₁₂, R₁₃, and R₁₄ are independently a bond or an alkylene group having 1 to 3 carbon atoms. 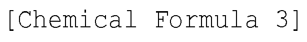 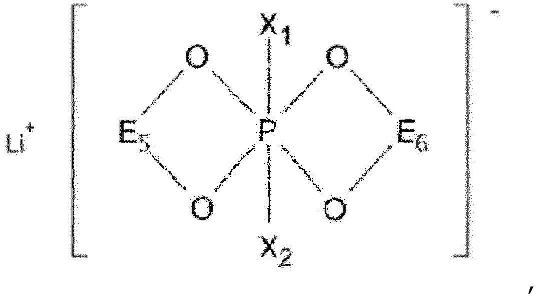 wherein, in Chemical Formula 3, X₁ and X₂ are independently F, Cl, Br, or I; E₅ and E₆ are independently a substituted or unsubstituted hydrocarbon group having 1 to 3 carbon atoms, and the substitution is performed with one or more selected from the group consisting of =O, -CX'₃, and - CH₂CX"₃; X' and X" are independently F, Cl, Br, or I; and bonds between carbons included in E₅ and E₆ are single bonds or double bonds. 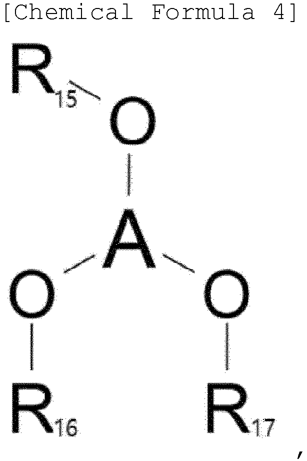 wherein, in Chemical Formula 4, A is phosphorus (P), sulfur (S), or nitrogen (N); and R₁₅, R₁₆, and R₁₇ are independently a linear or branched alkyl group having 1 to 5 carbon atoms including substituents, and the substituents include one or more selected from the group consisting of halogen elements including F, Cl, Br, and I and oxygen (=O). 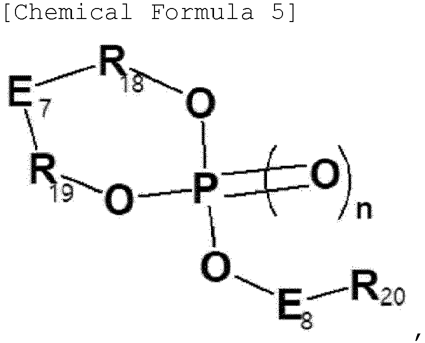 wherein, in Chemical Formula 5, R₁₈ and R₁₉ are independently an alkylene group having 1 to 5 carbon atoms; E₇ is a bond, an alkylene group having 1 to 3 carbon atoms, a cyclic carbonyl group having 2 to 5 carbon atoms, an ether group, or an ester group; R₂₀ is a substituted or unsubstituted linear or cyclic carbonate group having 2 to 5 carbon atoms, a carbonyl group, an ether group, a phosphate group, a sulfonate group, or a sulfate group, and the substitution is performed with one or more selected from the group consisting of F, Cl, Br, and I or an alkenyl group having 1 to 3 carbon atoms; E₈ is a bond, a saturated or unsaturated alkylene group having 1 to 3 carbon atoms, or an ether group; and n is 0 or 1. 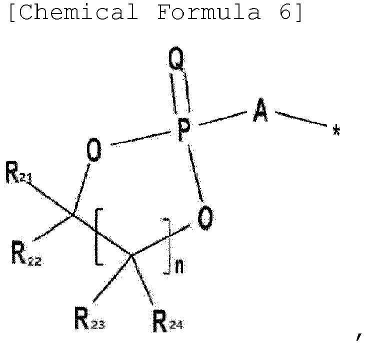 wherein, in Chemical Formula 6, P and O are phosphorus and oxygen, respectively; A is a bond or oxygen; Q is oxygen or an unshared electron pair; R₂₁, R₂₂, R₂₃, and R₂₄ are independently hydrogen, a linear or branched alkyl group having 1 to 10 carbon atoms, an alkenyl group, an alkynyl group, an alkoxy group, an alkoxycarbonyl group, an alkoxyalkyl group, fluoroalkyl, or 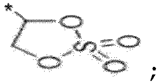 optionally, R₂₁ or R₂₂ is independently bonded to R₂₃ or R₂₄ to form a double bond or ring; n is an integer from 0 to 3; and * is a bond position.

Based on a total weight of the electrolyte, the electrolyte may include preferably 0.1 to 10 % by weight of one or more selected from among the compounds represented by Chemical Formulas 1 to 6.

One or more selected from among the compounds represented by Chemical Formulas 1 to 6 may include preferably a compound represented by Chemical Formula 5-52 below:

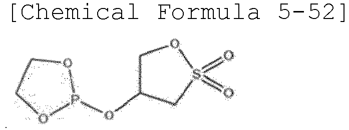

The compound represented by Chemical Formula 1 may include one or more selected from the group consisting of compounds represented by Chemical Formulas 1-1 to 1-24 below: 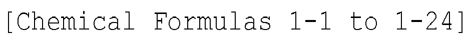 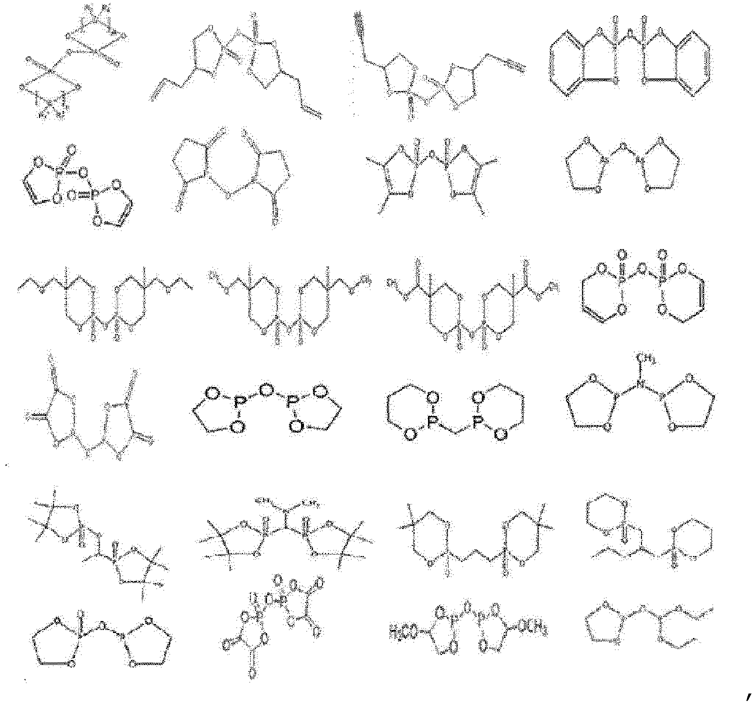 wherein, in Chemical Formula 1-1, A₁ and A₂ are each independently phosphorus or sulfur; R₁', R₂', R₃', and R₄' are each independently hydrogen or a substituted or unsubstituted alkyl group having 1 to 10 carbon atoms; and m and n are each independently an integer from 1 to 5, and

in Chemical Formulas 1-2 to 1-24, a line is a bond; carbon is located at a point where no separate element is shown and bonds meet; and the number of hydrogens satisfying the valence of the carbon is omitted.

The compound represented by Chemical Formula 2 may include one or more selected from the group consisting of compounds represented by Chemical Formulas 2-1 to 2-4 below: 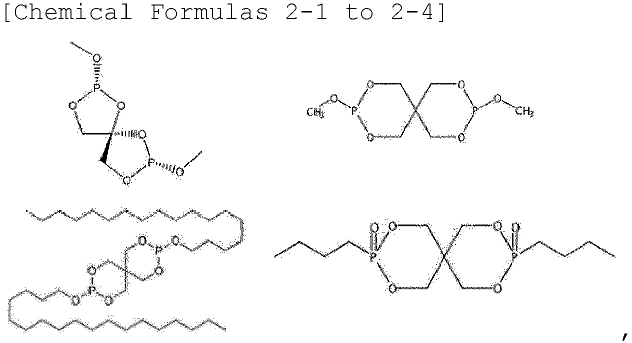 wherein, in Chemical Formulas 2-1 to 2-4, a line is a bond; when no separate element is shown, carbon is located at a point where bonds meet; and the number of hydrogens satisfying a valence of the carbon is omitted.

The compound represented by Chemical Formula 3 may include one or more selected from the group consisting of compounds represented by Chemical Formulas 3-1 and 3-2 below: 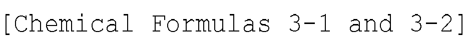 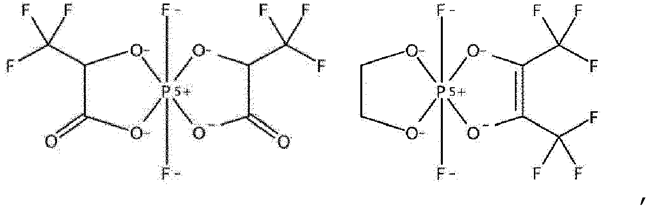 wherein, in Chemical Formulas 3-1 and 3-2, a line is a bond; when no separate element is shown, carbon is located at a point where bonds meet; and the number of hydrogens satisfying a valence of the carbon is omitted.

The compound represented by Chemical Formula 4 may be a compound represented by Chemical Formula 4A below: 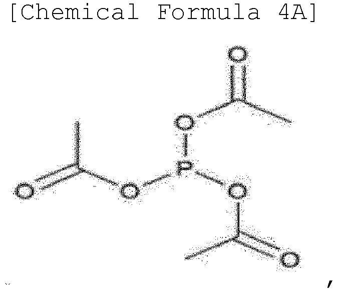 wherein, in Chemical Formula 4A, a line is a bond; when no separate element is shown, carbon is located at a point where bonds meet; and the number of hydrogens satisfying a valence of the carbon is omitted.

The compound represented by Chemical Formula 5 may include one or more selected from the group consisting of compounds represented by Chemical Formulas 5-1 to 5-52 below: 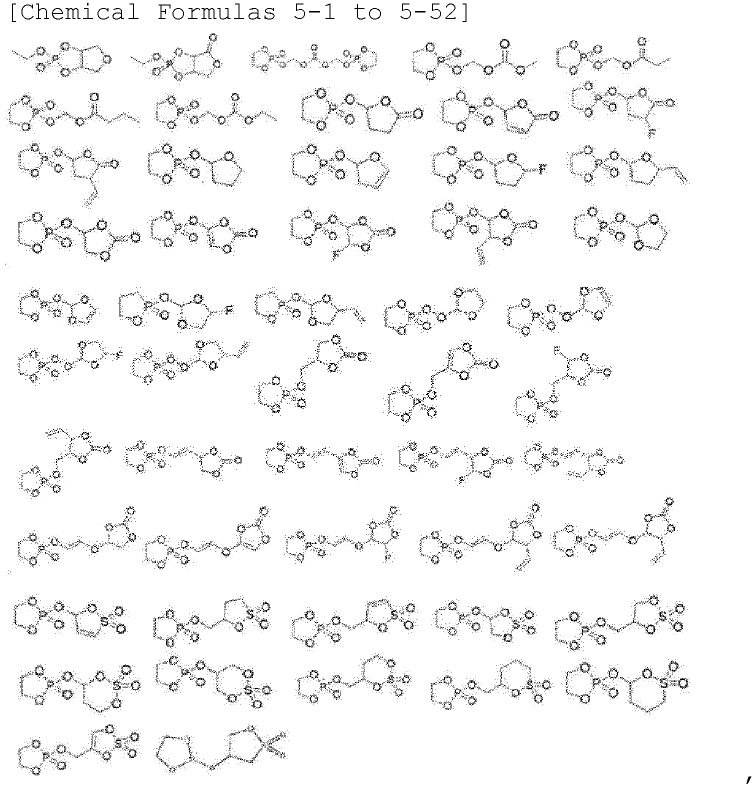 wherein, in Chemical Formulas 5-1 to 5-52, a line is a bond; when no separate element is shown, carbon is located at a point where bonds meet; and the number of hydrogens satisfying a valence of the carbon is omitted.

The compound represented by Chemical Formula 6 may include one or more selected from the group consisting of compounds represented by Chemical Formulas 6-1 to 6-31 below: 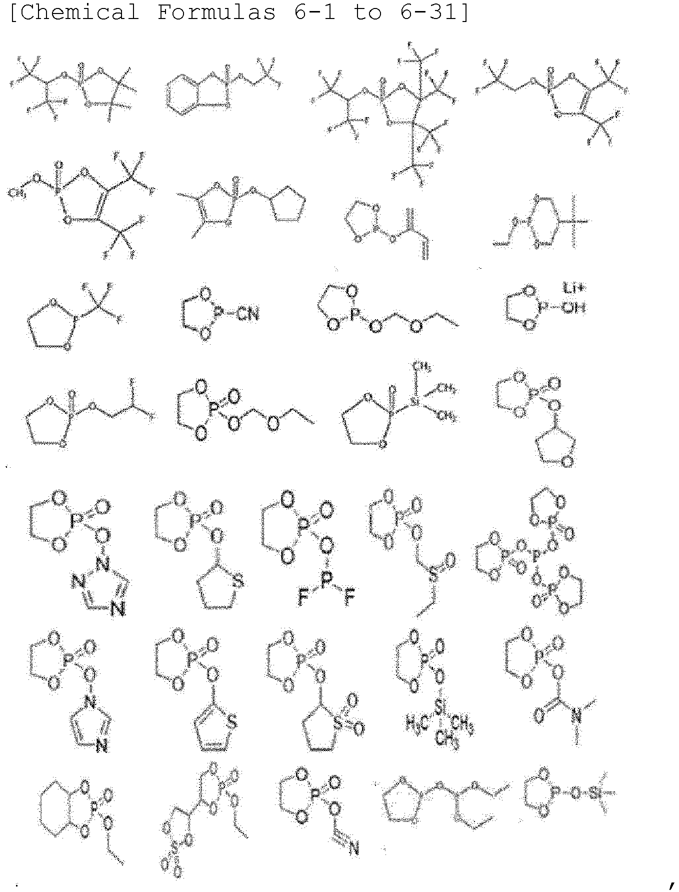 wherein, in Chemical Formulas 6-1 to 6-31, a line is a bond; when no separate element is shown, carbon is located at a point where bonds meet; and the number of hydrogens satisfying a valence of the carbon is omitted.

Based on 100 % by weight in total of the electrolyte, the electrolyte may further include 0.1 to 10 % by weight of a phosphate compound.

The phosphate compound may include preferably one or more selected from the group consisting of compounds represented by Chemical Formulas 7-1 to 7-7 below: 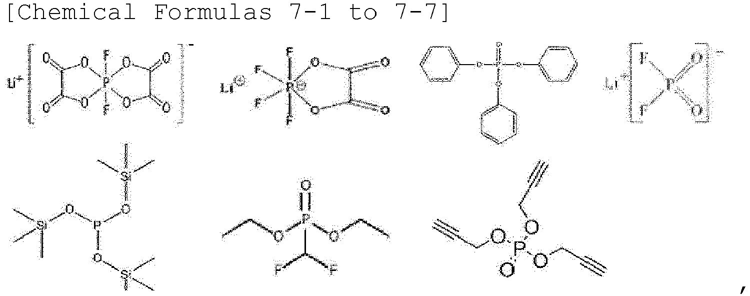 wherein, in Chemical Formulas 7-1 to 7-7, a line is a bond; carbon is located at a point where no separate element is shown and bonds meet; and the number of hydrogens satisfying the valence of the carbon is omitted.

The electrolyte may preferably include a solution obtained by dissolving one or more selected from among the compounds represented by Chemical Formulas 1 to 6 in the phosphate compound.

The electrolyte may include preferably organic solvents.

The organic solvents may include preferably one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP).

The electrolyte may include preferably lithium salt.

The lithium salt may include preferably one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, (CF₃SO₂) (C₂F₅SO₂) NLi, (SO₂F)₂NLi, and (CF₃SO₂)₂NLi.

Based on 100 mol% in total of the electrolyte, the electrolyte may include preferably 0.6 to 2 mol% of the lithium salt.

In accordance with another aspect of the present invention, provided is a secondary battery including an anode, a cathode, and an electrolyte, wherein the electrolyte is the above-described electrolyte.

The secondary battery may be a battery for automobiles.

### [Advantageous Effects]

When an electrolyte according to the present invention is used in a secondary battery, charging resistance can be reduced, thereby improving the charging efficiency and output of the secondary battery. In addition, the long-term lifespan and high-temperature capacity retention rate of the secondary battery are excellent.

### [Best Mode]

Hereinafter, the present invention will be described in detail, but the present invention is not limited thereto.

The present inventors have studied to develop a secondary battery for automobiles having high output and excellent high-temperature recovery capacity and lifespan characteristics. During the above research, the present inventors confirmed that all of the above objects could be achieved when additives having a specific structure were added to the electrolyte of a secondary battery. Based on these results, the present inventors conducted further studies to complete the present invention.

### Electrolyte

The present invention provides an electrolyte including one or more selected from among compounds represented by Chemical Formulas 1 to 6 below. In this case, due to reduced charging resistance, the output of a battery may be improved, and recovery capacity at high temperatures may be improved, which enables long-term storage. In addition, lifespan retention rate at high temperatures may be excellent.

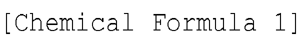

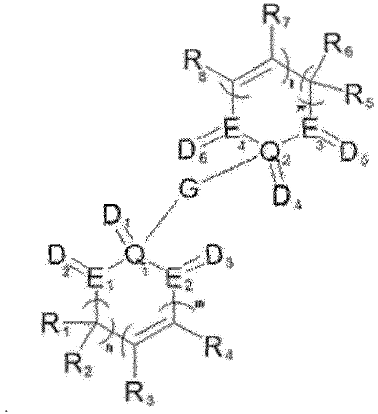

In Chemical Formula 1, G is -O-, -ORₐ-, -N(R_{b})-, -R_{c}-N(R_{d})-Rₑ-, -R_{f}(NR_{gRh})-, or -Rᵢ-; Rₐ, R_{c}, Rₑ, R_{f}, and Rᵢ are independently a linear or branched alkylene group having 1 to 10 carbon atoms; R_{b}, R_{d}, R_{g}, and Rₕ are independently hydrogen or a linear or branched alkyl group having 1 to 10 carbon atoms; Q₁ and Q₂ are independently phosphorus (P), sulfur (S), or arsenic (As); D₂, D₂, D₃, D₄, D₅, and D₆ are independently oxygen (=O) or one or two unshared electron pairs; E₁, E₂, E₃, or E₄ is oxygen or carbon, wherein, when D₂, D₃, D₅, or D₆ is oxygen, E₁, E₂, E₃, or E₄ bonded thereto is carbon; R₂, R₂, R₃, R₄, R₅, R₆, R₇, and R₈ are independently hydrogen, a linear or branched alkyl group having 1 to 10 carbon atoms, an alkenyl group, an alkynyl group, an alkoxy group, an alkoxycarbonyl group, or an alkoxyalkyl group; optionally, R₃ and R₄ or R₇ and R₈ may be bonded to each other to form a ring;

n and k are independently integers from 0 to 5; m and l are independently 0 or 1; and at least one of n and m and at least one of k and l are nonzero.

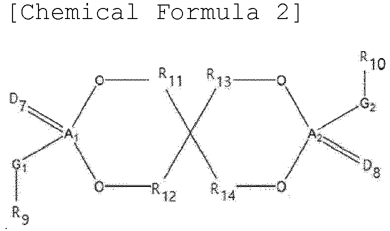

In Chemical Formula 2, A₁ and A₂ are independently phosphorus (P) or sulfur (S); D₇ and D₈ are independently oxygen (=O) or an unshared electron pair; G₁ and G₂ are independently -O- or -CH₂-; R₉ and R₁₀ are independently a linear or branched alkyl group having 1 to 20 carbon atoms; and R₁₁, R₁₂, R₁₃, and R₁₄ are independently a bond or an alkylene group having 1 to 3 carbon atoms.

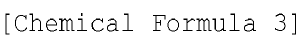

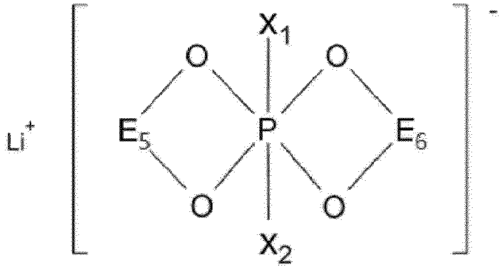

In Chemical Formula 3, X₁ and X₂ are independently F, Cl, Br, or I; E₅ and E₆ are independently a substituted or unsubstituted hydrocarbon group having 1 to 3 carbon atoms, and the substitution is performed with one or more selected from the group consisting of =O, -CX'₃, and -CH₂CX"₃; X' and X" are independently F, Cl, Br, or I; and bonds between carbons included in E₅ and E₆ are single bonds or double bonds.

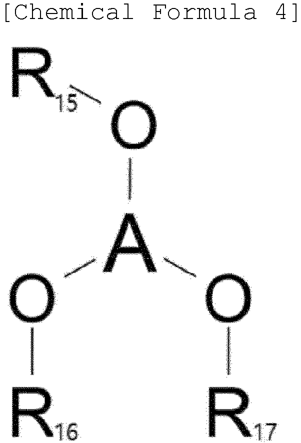

In Chemical Formula 4, A is phosphorus (P), sulfur (S), or nitrogen (N); and R₁₅, R₁₆, and R₁₇ are independently a linear or branched alkyl group having 1 to 5 carbon atoms including substituents, and the substituents include one or more selected from the group consisting of halogen elements including F, Cl, Br, and I and oxygen (=O).

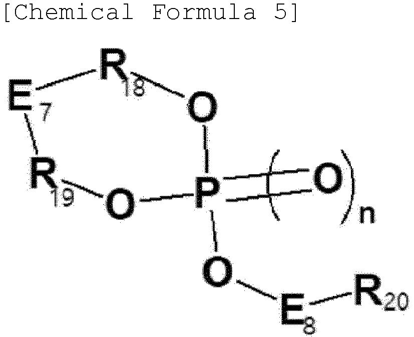

In Chemical Formula 5, R₁₈ and R₁₉ are independently an alkylene group having 1 to 5 carbon atoms; E₇ is a bond, an alkylene group having 1 to 3 carbon atoms, a cyclic carbonyl group having 2 to 5 carbon atoms, an ether group, or an ester group; R₂₀ is a substituted or unsubstituted linear or cyclic carbonate group having 2 to 5 carbon atoms, a carbonyl group, an ether group, a phosphate group, a sulfonate group, or a sulfate group, and the substitution is performed with one or more selected from the group consisting of F, Cl, Br, and I or an alkenyl group having 1 to 3 carbon atoms; E₈ is a bond, a saturated or unsaturated alkylene group having 1 to 3 carbon atoms, or an ether group; and n is 0 or 1.

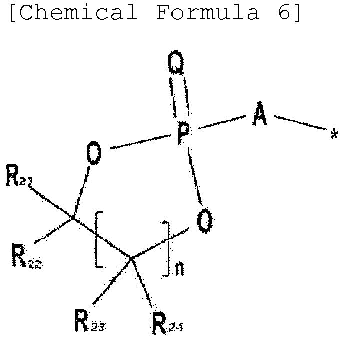

In Chemical Formula 6, P and O are phosphorus and oxygen, respectively; A is a bond or oxygen; Q is oxygen or an unshared electron pair; R₂₁, R₂₂, R₂₃, and R₂₄ are independently hydrogen, a linear or branched alkyl group having 1 to 10 carbon atoms, an alkenyl group, an alkynyl group, an alkoxy group, an alkoxycarbonyl group, an alkoxyalkyl group, fluoroalkyl, or 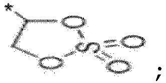 optionally, R₂₁ or R₂₂ is independently bonded to R₂₃ or R₂₄ to form a double bond or ring; n is an integer from 0 to 3; and * is a bond position.

As the electrolyte of the present invention, any electrolyte applicable to batteries may be used without being limited to the phase thereof. For example, the electrolyte may be a liquid electrolyte, a semi-solid electrolyte, or a solid electrolyte.

Based on a total weight of the electrolyte, the electrolyte may include one or more selected from among the compounds represented by Chemical Formulas 1 to 6 in an amount of 0.1 to 10 % by weight, preferably 0.2 to 5 % by weight, more preferably 0.4 to 2.0 % by weight, most preferably 0.5 to 1.5 % by weight. In this case, the compatibility of the electrolyte may be excellent, and thus manufacturing efficiency may be further improved. In addition, the output of a battery may be excellent.

One or more selected from among the compounds represented by Chemical Formulas 1 to 6 may include preferably a compound represented by Chemical Formula 5-52 below, without being limited thereto.

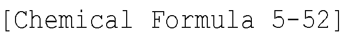

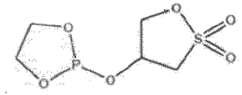

The compound represented by Chemical Formula 1 may include preferably one or more selected from the group consisting of compounds represented by Chemical Formulas 1-1 to 1-24 below, without being limited thereto.

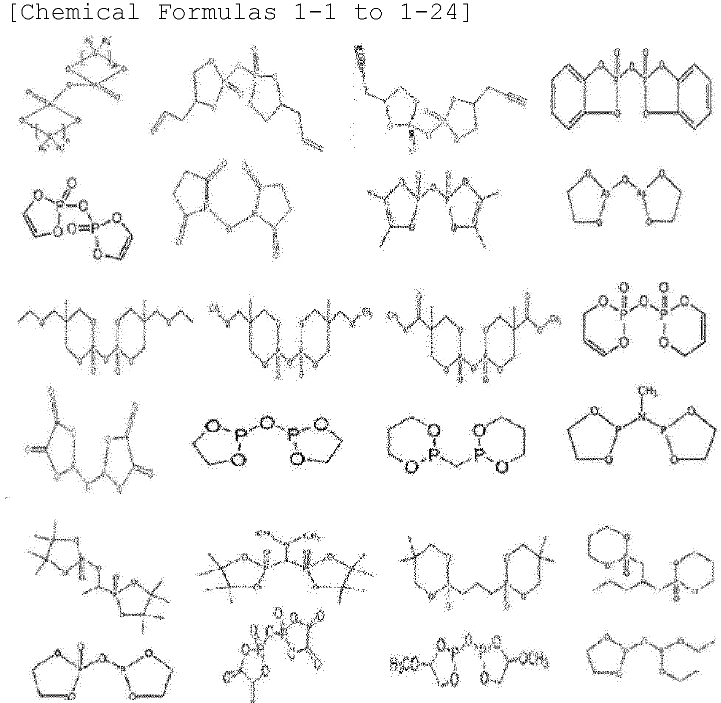

In Chemical Formula 1-1, A₁ and A₂ are each independently phosphorus or sulfur; R₁', R₂', R₃', and R₄' are each independently hydrogen or a substituted or unsubstituted alkyl group having 1 to 10 carbon atoms; and m and n are each independently an integer from 1 to 5.

In Chemical Formulas 1-2 to 1-24, a line is a bond; carbon is located at a point where no separate element is shown and bonds meet; and the number of hydrogens satisfying the valence of the carbon is omitted.

The compound represented by Chemical Formula 2 may include preferably one or more selected from the group consisting of compounds represented by Chemical Formulas 2-1 to 2-4 below, without being limited thereto.

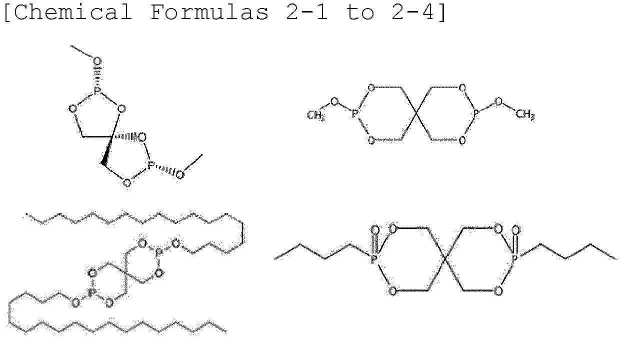

In Chemical Formulas 2-1 to 2-4, a line is a bond; when no separate element is shown, carbon is located at a point where bonds meet; and the number of hydrogens satisfying the valence of the carbon is omitted.

The compound represented by Chemical Formula 3 may include preferably one or more selected from the group consisting of compounds represented by Chemical Formulas 3-1 and 3-2 below, without being limited thereto.

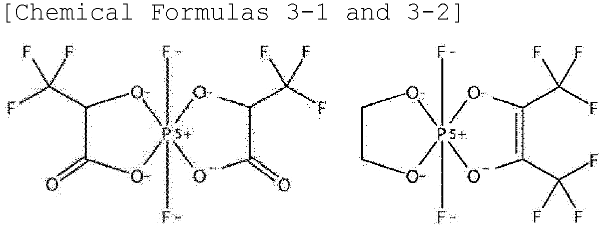

In Chemical Formulas 3-1 and 3-2, a line is a bond; when no separate element is shown, carbon is located at a point where bonds meet; and the number of hydrogens satisfying the valence of the carbon is omitted.

The compound represented by Chemical Formula 4 may be preferably a compound represented by Chemical Formula 4A below, without being limited thereto.

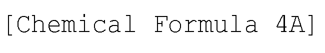

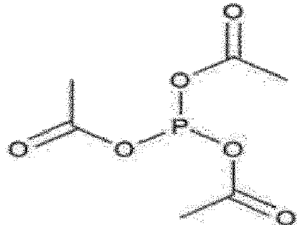

In Chemical Formula 4A, a line is a bond; when no separate element is shown, carbon is located at a point where bonds meet; and the number of hydrogens satisfying the valence of the carbon is omitted.

The compound represented by Chemical Formula 5 may include preferably one or more selected from the group consisting of compounds represented by Chemical Formulas 5-1 to 5-52 below, without being limited thereto.

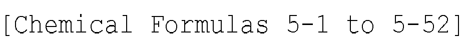

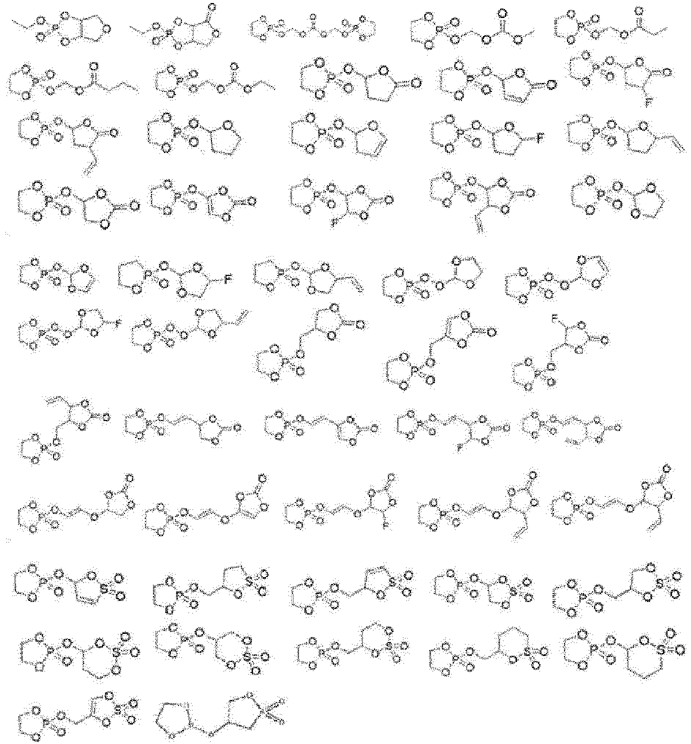

In Chemical Formulas 5-1 to 5-52, a line is a bond; when no separate element is shown, carbon is located at a point where bonds meet; and the number of hydrogens satisfying the valence of the carbon is omitted.

The compound represented by Chemical Formula 6 may include preferably one or more selected from the group consisting of compounds represented by Chemical Formulas 6-1 to 6-31 below, without being limited thereto.

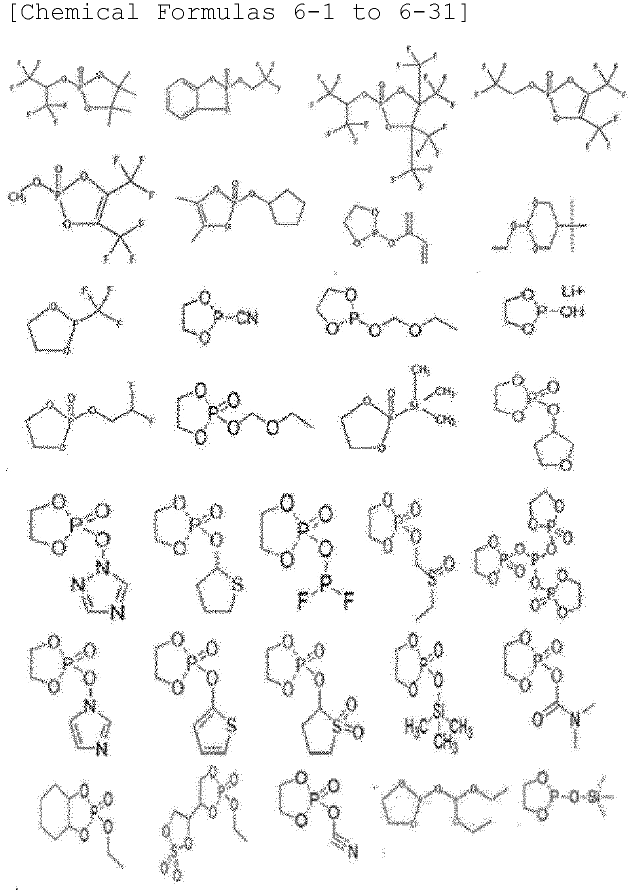

In Chemical Formulas 6-1 to 6-31, a line is a bond; when no separate element is shown, carbon is located at a point where bonds meet; and the number of hydrogens satisfying the valence of the carbon is omitted.

In Chemical Formula 1, when n, k, m, or l is 0, a corresponding unit, that is, a group in parentheses, disappears and means a bond. For example, when n, which is the number of a corresponding unit, is 0 and m, which the number of a corresponding unit, is 1, E₁ is a compound bonded directly to a double bonded carbon where R₃ is substituted.

In the present disclosure, the alkylene group means a divalent hydrocarbon group, and as a specific example, the propylene group refers to -CH₂CH₂CH₂- or -CH₂CH(CH₃)-.

In the present disclosure, the alkenyl group means a monovalent hydrocarbon group containing a carbon-carbon double bond, and as a specific example, the n-butenyl group refers to CH₂=CHCH₂CH₂-.

In the present disclosure, the alkynyl group means a monovalent hydrocarbon group containing a carbon-carbon triple bond, and as a specific example, the 1-butynyl group refers to CHCCH₂CH₂-.

Preferably, Rₐ, R_{c}, Rₑ, R_{f}, and Rᵢ are independently a linear or branched alkylene group having 1 to 3 carbon atoms. In this case, the charging resistance of a secondary battery may be reduced, thereby improving charging efficiency and output. In addition, long-term lifespan and high-temperature capacity retention rate may be excellent.

Preferably, R_{b}, R_{d}, R_{g}, and Rₕ are independently hydrogen or a linear alkyl group having 1 to 3 carbon atoms. In this case, the charging resistance of a secondary battery may be reduced, thereby improving charging efficiency and output. In addition, long-term lifespan and high-temperature capacity retention rate may be excellent.

Preferably, Q₁ and Q₂ are independently phosphorus (P). In this case, the charging resistance of a secondary battery may be reduced, thereby improving charging efficiency and output. In addition, long-term lifespan and high-temperature capacity retention rate may be excellent.

Preferably, R₁, R₂, R₃, R₄, R₅, R₆, R₇, and R₈ are independently hydrogen, a linear or branched alkyl group having 1 to 5 carbon atoms, an alkenyl group, an alkynyl group, an alkoxy group, an alkoxycarbonyl group, or an alkoxyalkyl group, more preferably hydrogen, a linear or branched alkyl group having 1 to 3 carbon atoms, an alkenyl group, an alkynyl group, an alkoxy group, an alkoxycarbonyl group, or an alkoxyalkyl group. In this case, the charging resistance of a secondary battery may be reduced, thereby improving charging efficiency and output. In addition, long-term lifespan and high-temperature capacity retention rate may be excellent.

R₃ and R₄ or R₇ and R₈ may be bonded to each other to preferably form an aromatic ring, more preferably a benzene ring. In this case, the charging resistance of a secondary battery may be reduced, thereby improving charging efficiency and output. In addition, long-term lifespan and high-temperature capacity retention rate may be excellent. Here, the benzene ring means to be formed as in Chemical Formula 5 below.

Preferably, n and k are independently an integer from 0 to 3, more preferably an integer from 1 to 3, still more preferably 2 or 3. In this case, the charging resistance of a secondary battery may be reduced, thereby improving charging efficiency and output. In addition, long-term lifespan and high-temperature capacity retention rate may be excellent.

Preferably, m and l are independently 1. In this case, the charging resistance of a secondary battery may be reduced, thereby improving charging efficiency and output. In addition, long-term lifespan and high-temperature capacity retention rate may be excellent.

The compound represented by Chemical Formula 1 is preferably symmetrical with respect to G. In this case, by forming a symmetrical cyclic structure, flow of electrons in a molecule is stabilized, thereby increasing molecular rigidity. As a result, battery performance may be greatly improved.

The compound represented by Chemical Formula 1 may include preferably one or more selected from the group consisting of compounds represented by Chemical Formulas 1-1 to 1-24 below, more preferably one or more selected from the group consisting of compounds represented by Chemical Formulas 1-15 to 1-24 below. In this case, the charging resistance of a secondary battery may be reduced, thereby improving charging efficiency and output. In addition, long-term lifespan and high-temperature capacity retention rate may be excellent.

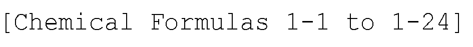

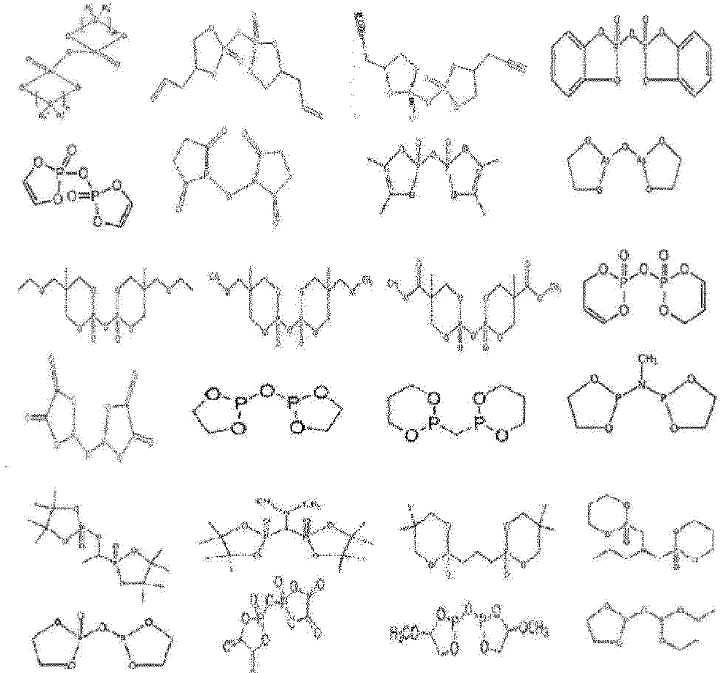

In Chemical Formula 1-1, A₁ and A₂ are each independently phosphorus or sulfur; R₁', R₂', R₃', and R₄' are each independently hydrogen or a substituted or unsubstituted alkyl group having 1 to 10 carbon atoms; and m and n are each independently an integer from 1 to 5.

In Chemical Formulas 1-2 to 1-24, a line is a bond; when no separate element is shown, carbon is located at a point where bonds meet; and the number of hydrogens satisfying the valence of the carbon is omitted.

In Chemical Formula 1-1, A₁ and A₂ are each independently phosphorus or sulfur; R₁', R₂', R₃', and R₄' are each independently hydrogen or a substituted or unsubstituted alkyl group having 1 to 10 carbon atoms; and m and n are each independently an integer from 1 to 5.

When the compound represented by Chemical Formula 1-1 is added to the electrolyte of a secondary battery, due to the electronegativity difference between the P or S element and the O element directly connected thereto, electrons are localized towards the O element. As a result, the P or S element becomes electron-deficient (e⁻ poor, 5+), and an oxidation reaction is induced in the electrolyte containing lithium ions, forming a stable film on an electrode, specifically a cathode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

In Chemical Formula 1-1, A₁ and A₂ are each independently phosphorus or sulfur. In view of the above effects, phosphorus having a larger electronegativity difference with the O element is more preferable.

R₁', R₂', R₃', and R₄' may each independently be hydrogen or a substituted or unsubstituted alkyl group having 1 to 10 carbon atoms, preferably hydrogen or a methyl group, still more preferably hydrogen.

m and n may each independently be an integer from 1 to 5, preferably an integer from 1 to 3, still more preferably 1 or 2. When R₁', R₂', R₃', and R₄' are each independently hydrogen, and m and n are each independently 1 or 2, stability may be greatly improved due to simplification of a molecular structure.

In Chemical Formula 1-1, A₁ and A₂ and m and n may each independently be the same or different. When A₁ and A₂ are the same element, "m=n" is satisfied, and the chemical structure of the compound is symmetrical, by forming a symmetrical cyclic structure, flow of electrons in a molecule is stabilized, thereby increasing molecular rigidity. As a result, battery performance may be greatly improved. However, the present invention is not limited thereto, and the above-described effects of the present invention may be exhibited even in an asymmetric structure.

The compound represented by Chemical Formula 1-1 may be preferably a compound represented by Chemical Formula 1A.

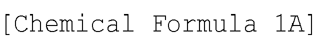

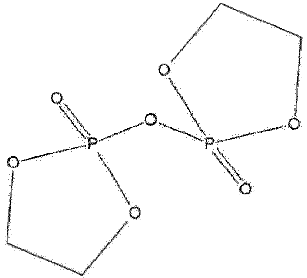

In the present invention, when the electrolyte is pyrophosphate having a symmetrical cyclic structure, such as the compound represented by Chemical Formula 1A, stable electron flow may be secured due to the symmetrical cyclic structure, and the stabilization effect may be maximized due to simplification of the molecular structure. When the compound is added as a secondary battery electrolyte, the charging resistance of a battery may be reduced, thereby improving the output of the battery. In addition, charging recovery capacity at high temperatures may be increased, thereby increasing the lifespan of the battery. Accordingly, the compound is preferable as an electrolyte for batteries.

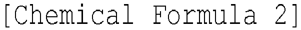

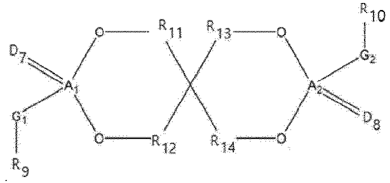

In Chemical Formula 2, A₁ and A₂ are independently phosphorus (P) or sulfur (S); D₇ and D₈ are independently oxygen (=O) or an unshared electron pair; G₁ and G₂ are independently -O- or -CH₂-; R₉ and R₁₀ are independently a linear or branched alkyl group having 1 to 20 carbon atoms; and R₁₁, R₁₂, R₁₃, and R₁₄ are independently a bond or an alkylene group having 1 to 3 carbon atoms.

In Chemical Formula 2, the alkylene group means a divalent hydrocarbon group. As a specific example, the propylene group refers to -CH₂CH₂CH₂- or -CH₂CH(CH₃)-.

Preferably, A₁ and A₂ are independently phosphorus (P). In this case, the charging resistance of a secondary battery may be reduced, thereby improving charging efficiency and output. In addition, long-term lifespan and high-temperature capacity retention rate may be excellent.

When D₇ and D₈ are oxygen (=O), G₁ and G₂ are preferably -CH₂-. When D₇ and D₈ are an unshared electron pair, G₁ and G₂ are preferably -O-. In this case, the charging resistance of a secondary battery may be reduced, thereby improving charging efficiency and output. In addition, long-term lifespan and high-temperature capacity retention rate may be excellent.

Preferably, R₉ and R₁₀ are independently a linear or branched alkyl group having 1 to 18 carbon atoms, more preferably a linear alkyl group having 1 to 18 carbon atoms. In this case, the charging resistance of a secondary battery may be reduced, thereby improving charging efficiency and output. In addition, long-term lifespan and high-temperature capacity retention rate may be excellent.

Preferably, R₁₁, R₁₂, R₁₃, and R₁₄ are independently a bond or -CH₂-. In this case, the charging resistance of a secondary battery may be reduced, thereby improving charging efficiency and output. In addition, long-term lifespan and high-temperature capacity retention rate may be excellent.

The compound represented by Chemical Formula 2 preferably has a symmetrical structure. In this case, by forming a structure including a symmetric ring, flow of electrons in a molecule may be stabilized, thereby increasing molecular rigidity and improving battery performance.

The compound represented by Chemical Formula 2 may include preferably one or more selected from the group consisting of compounds represented by Chemical Formulas 2-1 to 2-4 below. In this case, the charging resistance of a secondary battery may be reduced, thereby improving charging efficiency and output. In addition, long-term lifespan and high-temperature capacity retention rate may be excellent.

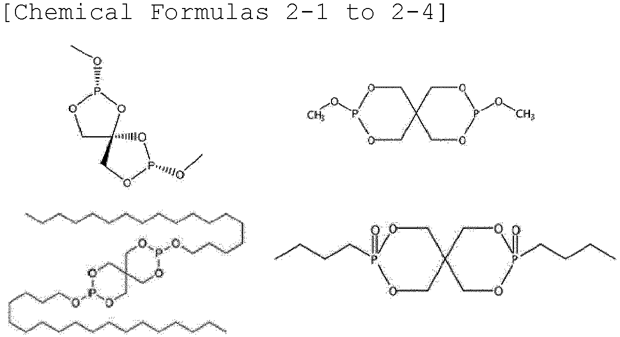

In Chemical Formulas 2-1 to 2-4, a line is a bond; when no separate element is shown, carbon is located at a point where bonds meet; and the number of hydrogens satisfying the valence of the carbon is omitted.

When the electrolyte additive represented by Chemical Formula 2 is added to the electrolyte of a battery, due to the electronegativity difference between the P or S element and the O element directly connected thereto, electrons are localized towards the O element. As a result, the P or S element becomes electron-deficient (e⁻ poor, 5+), and an oxidation reaction is induced in the electrolyte containing lithium ions, forming a stable film on an electrode, as a specific example, a cathode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

In Chemical Formula 2, A₁ and A₂ are each independently phosphorus or sulfur. In view of the above effects, phosphorus having a larger electronegativity difference with the O element is more preferable.

When the compound represented by Chemical Formula 2 has a symmetrical chemical structure, by forming a symmetrical cyclic structure, flow of electrons in a molecule is stabilized, thereby increasing molecular rigidity. As a result, battery performance may be greatly improved. However, the present invention is not limited thereto, and the above-described effects of the present invention may be exhibited even in an asymmetric structure.

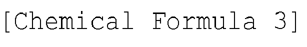

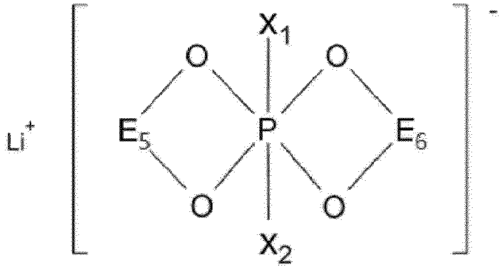

In Chemical Formula 3, X₁ and X₂ are independently F, Cl, Br, or I; E₅ and E₆ are independently a substituted or unsubstituted hydrocarbon group having 1 to 3 carbon atoms, and the substitution is performed with one or more selected from the group consisting of =O, -CX'₃, and -CH₂CX"₃; X' and X" are independently F, Cl, Br, or I; and bonds between carbons included in E₅ and E₆ are single bonds or double bonds.

Preferably, X₁, X₂, X', and X" are independently F or Cl, more preferably F. In this case, the charging resistance of a secondary battery may be reduced, thereby improving charging efficiency and output. In addition, long-term lifespan and high-temperature capacity retention rate may be excellent.

Preferably, E₅ and E₆ are independently a substituted or unsubstituted hydrocarbon group having 2 or 3 carbon atoms, and the substitution is preferably performed with one or more selected from the group consisting of 1 "=O" and 1 to 3 "-CX'₃". In this case, the charging resistance of a secondary battery may be reduced, thereby improving charging efficiency and output. In addition, long-term lifespan and high-temperature capacity retention rate may be excellent.

In addition, when E₅ and E₆ do not contain an oxygen (=O) substituent, bonds between the carbons of E₅ and E₆ may include a double bond. In this case, the bond stability of the compound may be improved, and battery lifespan may be further increased.

The compound represented by Chemical Formula 3 may preferably has a symmetrical structure with respect to the central P element. In this case, flow of electrons in a molecule may be stabilized, thereby increasing molecular rigidity and improving battery performance.

The compound represented by Chemical Formula 3 preferably includes one selected from the group consisting of compounds represented by Chemical Formulas 3-1 and 3-2 below as an anion. In this case, the charging resistance of a secondary battery may be reduced, thereby improving charging efficiency and output. In addition, long-term lifespan and high-temperature capacity retention rate may be excellent.

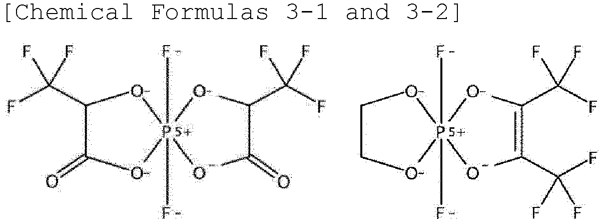

In Chemical Formulas 3-1 and 3-2, a line is a bond; when no separate element is shown, carbon is located at a point where bonds meet; and the number of hydrogens satisfying the valence of the carbon is omitted.

When the compound represented by Chemical Formula 3 is added to the electrolyte of a battery, due to the electronegativity difference between the P element and the O element directly connected thereto, electrons are localized towards the O element. As a result, the P element becomes electron-deficient (e⁻ poor, 5+), and an oxidation reaction is induced in the electrolyte containing lithium ions, forming a stable film on an electrode, as a specific example, a cathode.

At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved.

In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

When the compound represented by Chemical Formula 3 has a symmetrical chemical structure, by forming a symmetrical cyclic structure, flow of electrons in a molecule is stabilized, thereby increasing molecular rigidity. As a result, battery performance may be greatly improved. However, the present invention is not limited thereto, and the above-described effects of the present invention may be exhibited even in an asymmetric structure.

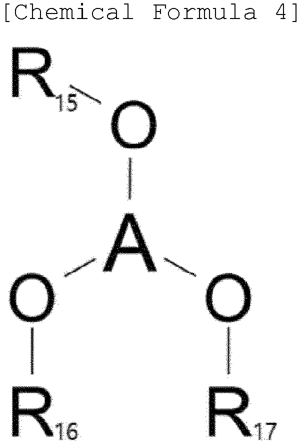

In Chemical Formula 4, A is phosphorus (P), sulfur (S), or nitrogen (N); and R₁₅, R₁₆, and R₁₇ are independently a linear or branched alkyl group having 1 to 5 carbon atoms including substituents, and the substituents include one or more selected from the group consisting of halogen elements including F, Cl, Br, and I and oxygen (=O).

In Chemical Formula 4, A is preferably phosphorus (P) . In this case, the charging resistance of a secondary battery may be reduced, thereby improving charging efficiency and output. In addition, long-term lifespan and high-temperature capacity retention rate may be excellent.

Preferably, R₁₅, R₁₆, and R₁₇ are independently a linear alkyl group containing a substituent and having 1 to 3 carbon atoms. In this case, the charging resistance of a secondary battery may be reduced, thereby improving charging efficiency and output. In addition, long-term lifespan and high-temperature capacity retention rate may be excellent. In addition, the substituent may include preferably one or more selected from the group consisting of F and oxygen (=O). In this case, the charging efficiency and output of a secondary battery may be improved, and long-term lifespan and high-temperature capacity retention rate may be improved.

In the compound represented by Chemical Formula 4, R₁₅, R₁₆, and R₁₇ are preferably the same. In this case, flow of electrons in a molecule may be stabilized, thereby increasing molecular rigidity and improving battery performance.

The compound represented by Chemical Formula 4 may include preferably a compound represented by Chemical Formula 4A below. In this case, the charging resistance of a secondary battery may be reduced, thereby improving charging efficiency and output. In addition, long-term lifespan and high-temperature capacity retention rate may be excellent.

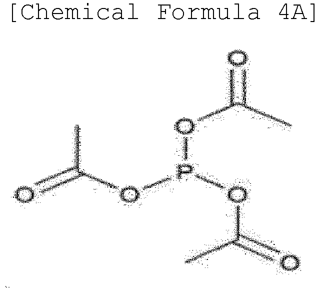

In Chemical Formula 4A, a line is a bond; when no separate element is shown, carbon is located at a point where bonds meet; and the number of hydrogens satisfying the valence of the carbon is omitted.

When the electrolyte additive represented by Chemical Formula 4 is added to the electrolyte of a battery, due to the electronegativity difference between the P, S, or N element and the O element directly connected thereto, electrons are localized towards the O element. As a result, the P, S, or N element becomes electron-deficient (e⁻ poor, δ+), and an oxidation reaction is induced in the electrolyte containing lithium ions, forming a stable film on an electrode, for example, a cathode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

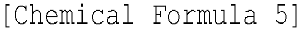

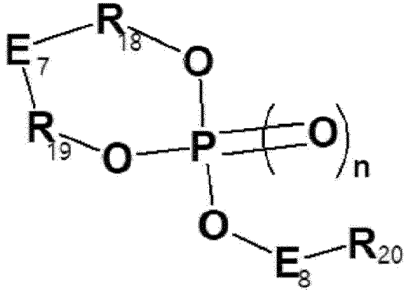

In Chemical Formula 5, R₁₈ and R₁₉ are independently an alkylene group having 1 to 5 carbon atoms; E₇ is a bond, an alkylene group having 1 to 3 carbon atoms, a cyclic carbonyl group having 2 to 5 carbon atoms, an ether group, or an ester group; R₂₀ is a substituted or unsubstituted linear or cyclic carbonate group having 2 to 5 carbon atoms, a carbonyl group, an ether group, a phosphate group, a sulfonate group, or a sulfate group, and the substitution is performed with one or more selected from the group consisting of F, Cl, Br, and I or an alkenyl group having 1 to 3 carbon atoms; E₈ is a bond, a saturated or unsaturated alkylene group having 1 to 3 carbon atoms, or an ether group; and n is 0 or 1.

In Chemical Formula 5, the alkylene group means a divalent hydrocarbon group. As a specific example, the propylene group refers to -CH₂CH₂CH₂- or -CH₂CH(CH₃)-.

In the present disclosure, the alkenyl group means a monovalent hydrocarbon group containing a carbon-carbon double bond, and as a specific example, the n-butenyl group refers to CH₂=CHCH₂CH₂-.

Preferably, R₁₈ and R₁₉ are independently an alkylene group having 1 or 2 carbon atom. In this case, the charging resistance of a secondary battery may be reduced, thereby improving charging efficiency and output. In addition, long-term lifespan and high-temperature capacity retention rate may be excellent.

E₇ is preferably a bond, a cyclic carbonyl group having 2 to 3 carbon atoms, an ether group, or an ester group. In this case, the charging resistance of a secondary battery may be reduced, thereby improving charging efficiency and output. In addition, long-term lifespan and high-temperature capacity retention rate may be excellent.

R₂₀ is preferably a substituted or unsubstituted linear or cyclic carbonate group having 2 to 3 carbon atoms, a carbonyl group, an ether group, a phosphate group, or a sulfate group, and the substitution is preferably performed with F or a vinyl group. In this case, the charging resistance of a secondary battery may be reduced, thereby improving charging efficiency and output. In addition, long-term lifespan and high-temperature capacity retention rate may be excellent.

E₈ is preferably a bond, a saturated or unsaturated alkylene group having 1 or 2 carbon atoms (2 carbon atoms in case of unsaturated), or an ether group. In this case, the charging resistance of a secondary battery may be reduced, thereby improving charging efficiency and output. In addition, long-term lifespan and high-temperature capacity retention rate may be excellent.

When n is 0, the phosphorus (P) element has an unshared electron pair instead of oxygen.

The compound represented by Chemical Formula 5 may include preferably one or more selected from the group consisting of compounds represented by Chemical Formulas 5-1 to 5-52 below. In this case, the charging resistance of a secondary battery may be reduced, thereby improving charging efficiency and output. In addition, long-term lifespan and high-temperature capacity retention rate may be excellent.

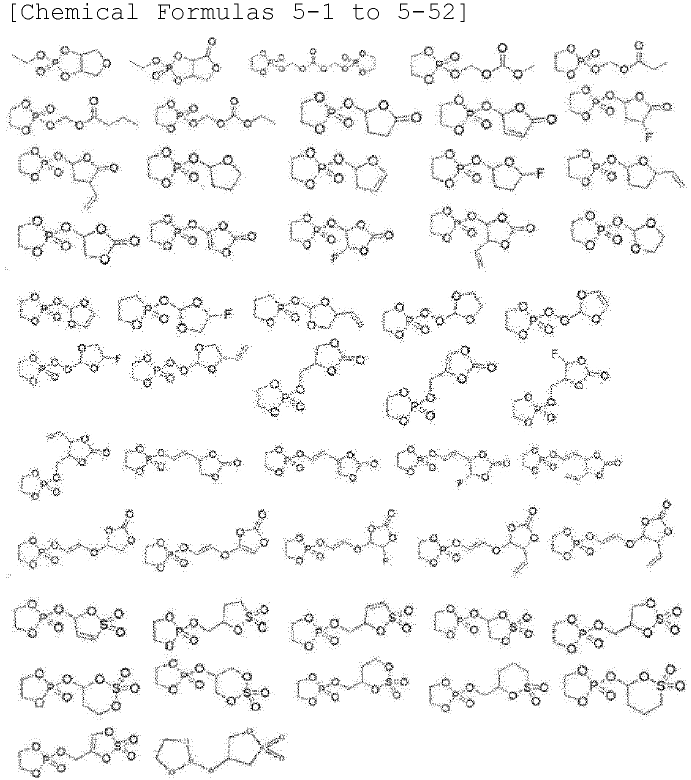

In Chemical Formulas 5-1 to 5-52, a line is a bond; when no separate element is shown, carbon is located at a point where bonds meet; and the number of hydrogens satisfying the valence of the carbon is omitted.

In the compound represented by Chemical Formula 5, when n is 1, the compound preferably includes one or more selected from the group consisting of compounds represented by Chemical Formulas 5-1 to 5-51. In this case, the charging resistance of a secondary battery may be reduced, thereby improving charging efficiency and output. In addition, long-term lifespan and high-temperature capacity retention rate may be excellent.

When the electrolyte additive represented by Chemical Formula 5 is added to the electrolyte of a battery, due to the electronegativity difference between the P element and the O element directly connected thereto, electrons are localized towards the O element. As a result, the P element becomes electron-deficient (e⁻ poor, δ+), and an oxidation reaction is induced in the electrolyte containing lithium ions, forming a stable film on an electrode, as a specific example, a cathode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

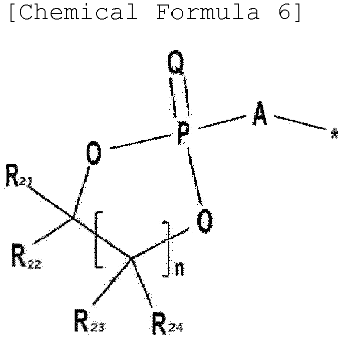

In Chemical Formula 6, P and O are phosphorus and oxygen, respectively; A is a bond or oxygen; Q is oxygen or an unshared electron pair; R₂₁, R₂₂, R₂₃, and R₂₄ are independently hydrogen, a linear or branched alkyl group having 1 to 10 carbon atoms, an alkenyl group, an alkynyl group, an alkoxy group, an alkoxycarbonyl group, an alkoxyalkyl group, fluoroalkyl, or 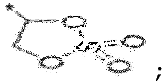 optionally, R₂₁ or R₂₂ is independently bonded to R₂₃ or R₂₄ to form a double bond or ring; n is an integer from 0 to 3; and * is a bond position.

In Chemical Formula 6, the ring may be preferably an aromatic or aliphatic ring, n may be preferably 1 or 2, and the fluoroalkyl may be preferably an alkyl substituted with 2 to 8 fluoro groups.

In the compound in which the group represented by Chemical Formula 6 is substituted, various groups may be bonded as necessary to the * position of the group represented by Chemical Formula 1. For example, a linear or branched alkyl group having 1 to 10 carbon atoms, an alkenyl group, an alkynyl group, an alkoxy group, a hydroxy group, an alkoxycarbonyl group, an alkoxyalkyl group, a fluoroalkyl group, a cyano group, an alkylcyano group, alkylsilyl, an amide, imidazole, thiophene, an ether, a thioether, alkylsulfonyl, sulfonylalkyl, cycloalkylsulfonyl, cyclosulfonylalkyl, alkylsulfoxide, or phosphorus fluoride may be included. Here, the group named as the completed compound means that hydrogen or some atomic groups of the corresponding group are substituted at the * position with the group represented by Chemical Formula 6.

The compound in which the group represented by Chemical Formula 6 is substituted preferably includes one or more selected from the group consisting of compounds represented by Chemical Formulas 6-1 to 6-31 below, more preferably a compound represented by Chemical Formula 6-15 or 6-31 below. In this case, the charging resistance of a secondary battery may be reduced, thereby improving charging efficiency and output. In addition, long-term lifespan and high-temperature capacity retention rate may be excellent.

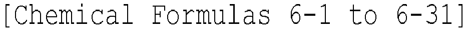

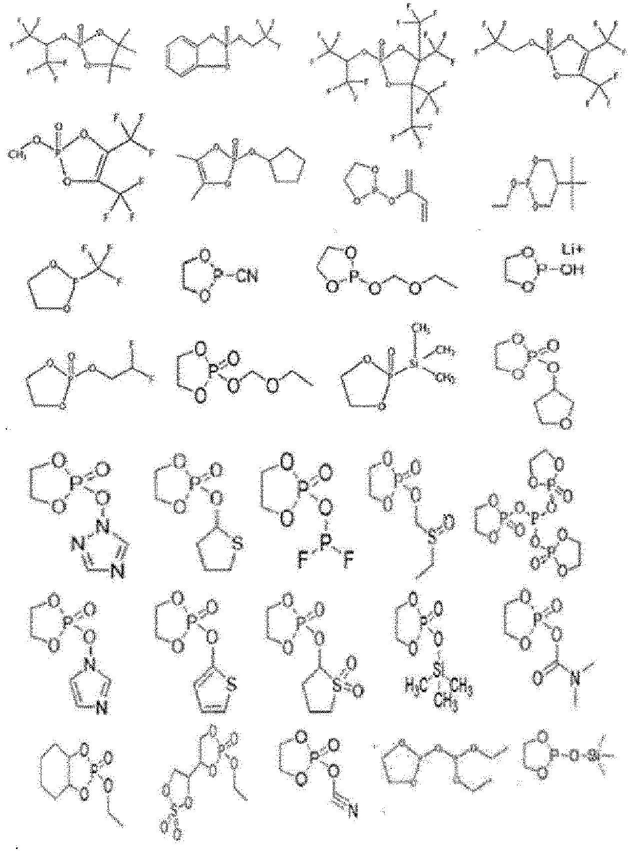

In Chemical Formulas 6-1 to 6-31, a line is a bond; when no separate element is shown, carbon is located at a point where bonds meet; and the number of hydrogens satisfying the valence of the carbon is omitted.

When the electrolyte additives represented by Chemical Formulas 6-1 to 6-31 are added to the electrolyte of a secondary battery, due to the electronegativity difference between the P or S element and the O element directly connected thereto, electrons are localized towards the O element. As a result, the P or S element becomes electron-deficient (e⁻ poor, δ+), and an oxidation reaction is induced in the electrolyte containing lithium ions, forming a stable film on an electrode, specifically a cathode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

Based on 100 % by weight in total of the electrolyte, the electrolyte may further include a phosphate compound in an amount of 0.1 to 10 % by weight, preferably 0.2 to 10 % by weight, more preferably 0.2 to 5 % by weight, still more preferably 0.4 to 2.0 % by weight, most preferably 0.5 to 1.5 % by weight. In this case, the compatibility of the electrolyte may be excellent, and thus manufacturing efficiency may be further improved. In addition, the output of a battery may be excellent.

The phosphate compound may include preferably one or more selected from the group consisting of compounds represented by Chemical Formulas 7-1 to 7-7 below, without being limited thereto.

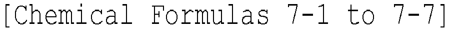

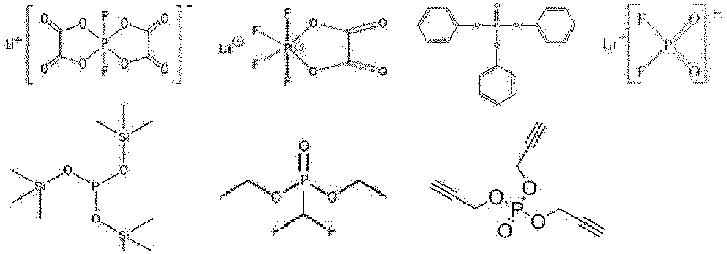

The electrolyte may preferably include a solution obtained by dissolving one or more selected from among the compounds represented by Chemical Formulas 1 to 6 in the phosphate compound.

The electrolyte may be added to the electrolyte of a secondary battery to form a stable film on an electrode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

In addition, the present invention provides an electrolyte including 0.1 to 10 % by weight of one or more selected from among the compounds represented by Chemical Formulas 1 to 6, 0.1 to 10 % by weight of the compound represented by Chemical Formula 7, organic solvents, and/or lithium salt.

The organic solvents may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP), preferably two or more selected from the group. In this case, the ionic conductivity and viscosity of the electrolyte may be easily controlled, thereby improving battery performance.

As a specific example, as the organic solvents, a mixed solvent prepared by mixing an organic solvent having high permittivity and high ion conductivity to improve the charge/discharge performance of a battery and a low-viscosity organic solvent having suitable viscosity for battery application may be used. More specifically, the high-permittivity organic solvent may include EC and/or PC, and the low-viscosity organic solvent may include one or more selected from the group consisting of EMC, DMC, and DEC.

The high-permittivity and low-viscosity organic solvents are preferably mixed in a volume ratio of 2:8 to 8:2. More specifically, a three-component mixed solvent of EC and/or PC, EMC, and DEC may be used. The ratio of EC and/or PC : EMC : DEC may be 1 : 3 to 5 : 2 to 4.

When the organic solvents contain water, since lithium ions in the electrolyte may be hydrolyzed, the water content in the organic solvents is preferably adjusted to 150 ppm or less, preferably 100 ppm or less.

For example, the electrolyte may include one or more selected from the group consisting of LiPF₆ and LiFSI as the lithium salt, preferably LiPF₆. In this case, since lithium ions may be smoothly supplied to a battery, battery performance may be excellent.

For example, the electrolyte may further include one or more selected from the group consisting of LiF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, (SO₂F)₂NLi, and (CF₃SO₂)₂NLi as the lithium salt. In this case, lithium ion may be supplied smoothly.

When the lithium salt is dissolved in the electrolyte, the lithium salt functions as a source of lithium ions in the lithium secondary battery to promote movement of lithium ions between the cathode and the anode. Accordingly, the lithium salt is preferably included in the electrolyte at a concentration of approximately 0.6 mol% to 2 mol%. When the concentration of the lithium salt is less than 0.6 mol%, the conductivity of the electrolyte may be reduced, resulting in deterioration of electrolyte performance. When the concentration of the lithium salt exceeds 2 mol%, the viscosity of the electrolyte may be increased, resulting in reduction in the mobility of lithium ions. Considering the conductivity of the electrolyte and the mobility of lithium ions, the lithium salt may be included in the electrolyte in an amount of preferably 0.7 mol% to 1.6 mol%, still more preferably 0.8 mol% to 1.5 mol%.

In addition to the electrolyte including the compounds represented by Chemical Formulas described above, the electrolyte of the present invention may further include commercially available additives that are generally used in electrolytes for the purpose of improving the lifespan characteristics of a battery, suppressing a decrease in battery capacity, and improving the discharge capacity of a battery.

The commercially available additives may include preferably one or more selected from the group consisting of vinylene carbonate (VC), fluoroethylene carbonate (FEC), vinylethylene carbonate (VEC), ethyl propionate, propyl propionate, 1,2-bis((difluorophosphaneyl)oxy)ethane, 2-fluoro-4-methyl-[1,3,2]-dioxaphospholane, difluoro(pentyloxy)phosphane, 1,3,6-hexanetricarbonitrile (HTCN), succinonitrile (SN), adiponitrile (AN), 4-tolunitrile, lithium bis(oxalato)borate, lithium difluoro (oxalate) borate, lithium tetrafluoroborate (LiBF₄), tris(trimethylsilyl)borate, triisopropyl borate, trimethoxyboroxine, lithium tetrafluro(oxalato) phosphate, lithium difluro(bisoxalato) phosphate, lithium difluorophosphate, tris(trimethylsilyl) phosphite, tripropagyl phosphate, triphenyl phosphate, 2,4,8,10-tetraoxa-3,9-dithiaspiro[5.5]undecane-3,3,9,9-tetraoxide, dimethyl sulfate, ethylene dimethanesulfonate, lithium bis(fluorosulfonyl)imide, ethylene sulfate, 1-propene-1,3-sultone, 1,3-propane sultone, 1,3-propylene sulfate, 1,4-butane sultone, sulfolene, biphenyl, cyclohexyl benzene, 4-fluorotoluene, fluorobenzene, 2-fluoro-biphenyl, and 3-fluoro-biphenyl.

Among the commercially available additives, one additive may be used along or two or more additives may be mixed and used. For example, fluoroethylene carbonate, 1,3-propanesultone, 1,3-propensultone, or ethylsulfuric acid may be used alone, or a combination of fluoroethylene carbonate and 1,3-propanesultone may be used, without being limited thereto.

Based on a total weight of the electrolyte, the additives may be included in an amount of 0.01 to 20 % by weight, preferably 0.1 to 10 % by weight.

### Secondary battery

The present invention provides a secondary battery including an anode, a cathode, a separator disposed between the anode and cathode, and the electrolyte of the present invention.

For example, the cathode may be prepared by preparing a composition for forming a cathode active material layer by mixing a cathode active material, a binder, and optionally a conductive material, and then applying the composition to a cathode current collector such as aluminum foil.

For example, as the cathode active material, a common high-nickel cathode active material used in lithium secondary batteries, an NCM (lithium nickel manganese cobalt oxide) cathode active material, or an LFP (lithium iron phosphate) cathode active material may be used. Preferably, a lithium complex metal oxide represented by the Chemical Formula of Li[NixCo_{1-x-y}Mn_{y}]O₂ (0<x<0.5, 0<y<0.5) may be used as the cathode active material. As a specific example, LiNiMnCoO₂ may be used as the cathode active material, but the present invention is not limited thereto.

For example, in the Chemical Formula of Li[NixCo_{1-x-y}Mn_{y}]O₂ representing the lithium complex metal oxide, the variables x and y may satisfy 0.0001<x<0.5, 0.0001<y<0.5, or 0.001<x<0.3, 0.001<y<0.3.

As another example, as the cathode active material, a compound (lithiated intercalation compound) capable of reversible intercalation and deintercalation of lithium may be used.

Among the compounds, from the viewpoint of improving the capacity characteristics and stability of a battery, one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (0≤x≤1, 0≤y≤1, 0≤x+y≤1, and M1 and M2 each independently includes any one selected from the group consisting of Al, Sr, Mg, and La) are preferably used.

For example, the anode may be prepared by preparing a composition for forming an anode active material layer by mixing an anode active material, a binder, and optionally a conductive agent, and then applying the composition to an anode current collector such as copper foil.

For example, as the anode active material, a compound capable of reversible intercalation and deintercalation of lithium may be used.

As a specific example, the anode active material may be a carbonaceous material such as a Si-based anode active material, artificial graphite, natural graphite, graphitized carbon fiber, or amorphous carbon.

In addition to the carbonaceous material, a metallic compound capable of being alloyed with lithium or a composite containing a metallic compound and a carbonaceous material may be used as the anode active material. For example, graphite may be used.

For example, the metal capable of being alloyed with lithium may include any one of Si, Al, Sn, Pb, Zn, Bi, In, Mg, Ga, Cd, Si alloy, Sn alloy, and Al alloy.

In addition, a metal lithium thin film may be used as the anode active material.

As the anode active material, one or more selected from the group consisting of crystalline carbon, amorphous carbon, carbon composite, lithium metal, and alloy including lithium may be used in terms of high stability.

In the secondary battery of the present invention, by adding the electrolyte including the compounds represented by the above-described Chemical Formulas, compared to conventional secondary batteries, battery charging resistance and output measured by hybrid pulse power characterization (HPPC) and battery characteristics, such as capacity recovery characteristics and lifespan characteristics, measured at a high temperature of 60 °C or higher may be significantly improved.

As specific example, the secondary battery of the present invention may have an HPPC charging resistance value of 500 mΩ or less, preferably 200 mQ or less, still more preferably 60 mQ, most preferably 65 mQ or less as measured at 60 °C.

In addition, the secondary battery may have a recovery capacity of 560 mAh or more, preferably 600 mAh or more, still more preferably 630 mAh or more, most preferably 700 mAh or more as measured at 60 °C.

The secondary battery may have a lifespan maintenance efficiency of 80 % or more, preferably 82 % or more, still more preferably 83 % or more as measured at 45 °C.

In the present disclosure, the HPPC charging resistance value may be measured by the method prescribed in the document "Battery test manual for plug-in hybrid electric vehicles (2010, Idaho National Laboratory for the U.S. Department of Energy.)", and is an important index representing battery output characteristics. In addition, charging resistance is a resistance value measured during charging of a battery. As the charging resistance decreases, energy loss may be reduced, charging speed may be increased, and the output of a battery may be improved. Since the secondary battery of the present invention has a low HPPC charging resistance value as described above, the secondary battery of the present invention has excellent charging speed and output, and thus is suitable for use as a battery for automobiles.

In the present disclosure, the recovery capacity represents the capacity conservation characteristics of a battery that has been left unattended for a long time. A discharged electric capacity when a battery left for a long time is discharged to a discharge end voltage and a discharged electric capacity when the discharged battery is recharged and discharged again to the discharge end voltage are measured. The two capacity values are compared. A high recovery capacity value means that the amount of natural discharge due to battery preservation (storage) is small, that is, a battery may be preserved for a long time. In particular, since the natural discharge rate increases as the storage temperature of a battery increases, recovery capacity at high temperatures is a very important characteristic in batteries for automobiles. When the compounds of the present invention are added to an electrolyte for batteries, recovery capacity is improved compared to using conventional additives. That is, long-term storage is possible with a single charge.

Therefore, when the battery of the present invention is used as an electric battery for automobiles, output, which depends on the size of an automobile, may be improved. In addition, considering climate change and the environment of an automobile exposed to sunlight while driving or parking, automobile performance at low and high temperatures may be improved. That is, the battery of the present invention may exhibit excellent performance as an automotive battery.

Therefore, when the electrolyte according to embodiments of the present invention is applied to a secondary battery, charging resistance, output, recovery capacity, and lifespan efficiency may be improved, and thus the electrolyte is suitable for use as a secondary battery for automobiles.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Synthesis Examples]

### Synthesis Example 1: Preparation of 1,3,2-dioxaphospholane-2-yl diethyl phosphite

2.38 g (17.2 mmol) of diethyl phosphite was put into a 50 ml dry three-necked flask, and 5 ml of benzene was added thereto dropwise. While stirring, 1.75 g (17.2 mmol) of triethylamine was slowly added thereto dropwise. While maintaining the reaction temperature at 0 °C, 2.18 g (17.2 mmol) of ethylene chlorophosphite was slowly added thereto dropwise over 30 minutes. After completion of the dropwise addition, stirring was performed at 0 °C for 30 minutes, and the resulting triethylamine salt was filtered. The filtrate was subjected to vacuum distillation to obtain 2.1 g (yield: 55%) of 1,3,2-dioxaphospholane-2-yl diethyl phosphite as the desired product. The obtained product had a structure of Chemical Formula 1-24 upon 1H NMR analysis as follows.

1H NMR (CDCl₃, 400MHz) δ = 4.18 (m, 2H), 4.05 (m, 2H), 3.85 (m, 4H), 1.24 (m, 6H)

### Synthesis Example 2: Preparation of 2-((trimethylsilyl)oxy)-1,3,2-dioxaphospholane

5 g (55.4 mmol) of trimethylsilanol was put into a 100 ml dry three-necked flask, and 50 ml of diethyl ether and 6.1g (60.0 mmol) of triethylamine as solvents were added thereto dropwise. While maintaining the reaction temperature at -10 °C, 5.8 g (46.1 mmol) of 2-chloro-1,3,2-dioxaphospholane was slowly added thereto dropwise. Stirring was performed for 10 hours for the reaction, and the triethylamine salt was removed by filtration at room temperature. The filtrate was subjected to vacuum distillation to obtain 4.9 g (yield: 60 %) of 2-((trimethylsilyl)oxy)-1,3,2-dioxaphospholane as the desired product. The obtained product had a structure of Chemical Formula 6-31 upon 1H NMR analysis as follows.

1H NMR (CDCl₃, 400MHz) δ = 4.12 (m, 2H), 3.92 (m, 2H), 0.18 (s, 9H)

### [Examples: Preparation of electrolyte for batteries]

### Example 1

A carbonate-based mixed solvent having a volume ratio of 3:4:3 (EC:EMC:DEC) was used as the organic solvent, and 0.5 % by weight of a compound (Bisethylene pyrophosphate) represented by Chemical Formula 1A below was added to a solution containing LiPF₆ as lithium salt at a concentration of 1.15 M to prepare an electrolyte for batteries.

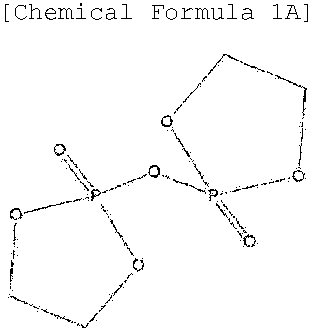

### Example 2

A carbonate-based mixed solvent having a volume ratio of 3:4:3 (EC:EMC:DEC) was used as the organic solvent, and 0.5 % by weight of the compound represented by Chemical Formula 1A and 1 % by weight of a compound represented by Chemical Formula 7-5 below as electrolyte additives were added to a solution containing LiPF₆ as lithium salt at a concentration of 1.15 M to prepare an electrolyte for batteries.

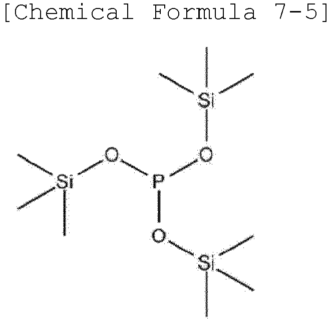

### Example 3

The same procedure as in Example 2 was performed except that, instead of the electrolyte additive represented by Chemical Formula 1A of Example 2, an electrolyte additive represented by Chemical Formula 2-2 below was added in an amount of 0.3 % by weight, and a compound represented by Chemical Formula 7-1 below was used as an additional additive instead of the compound represented by Chemical Formula 7-5.

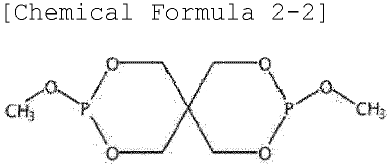

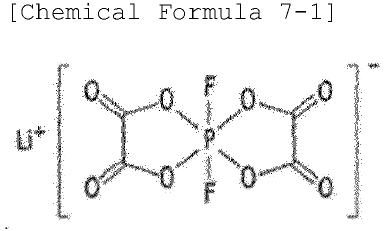

### Example 4

The same procedure as in Example 2 was performed except that, instead of the electrolyte additive represented by Chemical Formula 1A of Example 2, an electrolyte additive represented by Chemical Formula 3-1 below was added in an amount of 0.8 % by weight, and a compound represented by Chemical Formula 7-4 below was used as an additional additive instead of the compound represented by Chemical Formula 7-5.

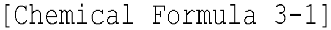

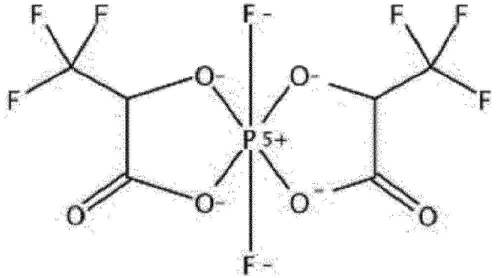

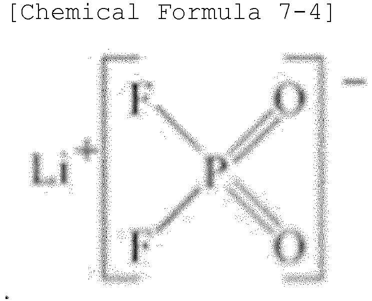

### Example 5

The same procedure as in Example 2 was performed except that, instead of the electrolyte additive represented by Chemical Formula 1A of Example 2, an electrolyte additive represented by Chemical Formula 4A below was added in an amount of 1.0 % by weight.

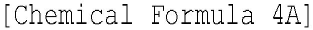

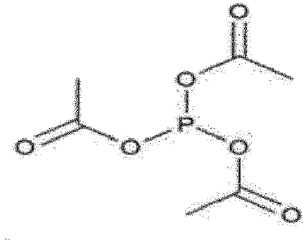

### Examples 6 to 8

The same procedure as in Example 2 was performed except that, instead of the compound represented by Chemical Formula 1A of Example 2, a compound represented by Chemical Formula 5-52 below was added in amounts of 0.5 % by weight, 1.0 % by weight, and 2.0 % by weight, respectively.

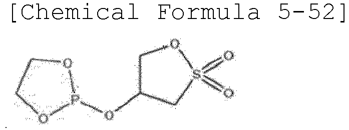

### Examples 9 and 10

The same procedure as in Example 1 was performed except that, instead of the electrolyte additive of Example 1, the electrolyte additive represented by Chemical Formula 1-24 prepared in Synthesis Example 1 was added in amounts of 0.5 % by weight and 1 % by weight, respectively.

### Examples 11 and 12

The same procedure as in Example 1 was performed except that, instead of the compound of Example 1, the compound represented by Chemical Formula 6-31 prepared in Synthesis Example 2 was added in amounts of 0.5 % by weight and 1 % by weight, respectively.

### Comparative Example 1

The same procedure as in Example 2 was performed except that the electrolyte additive represented by Chemical Formula 1-14 of Example 2 was not used.

### Comparative Example 2

The same procedure as in Example 1 was performed except that, instead of the compound represented by Chemical Formula 1A of Example 1, cyclic ethylene phosphate having an asymmetric structure was added in an amount of 0.5 % by weight.

For reference, the components and contents of the electrolytes used in Examples 1 to 12 and Comparative Examples 1 and 2 are shown in Table 1 below.

### Manufacture of battery

92 % by weight of Li (Ni_{0.5}Co_{0.2}Mn_{0.3})O₂ as a cathode active material, 4 % by weight of carbon black as a conductive material, and 4 % by weight of polyvinylidene fluoride (PVdF) as a binder were added to N-methyl-2-pyrrolidone (NMP) as a solvent to prepare cathode mixture slurry. The cathode mixture slurry was applied onto an aluminum (Al) thin film having a thickness of about 20 µm as a cathode current collector, followed by drying. Then, the dried thin film was subjected to roll pressing to manufacture a cathode.

96 % by weight of carbon powder as an anode active material, 3 % by weight of PVdF as a binder, and 1 % by weight of carbon black as a conductive material were added to NMP as a solvent to prepare anode mixture slurry. The anode mixture slurry was applied onto a copper (Cu) thin film having a thickness of 10 pm as an anode current collector, followed by drying. Then, the dried thin film was subjected to roll pressing to manufacture an anode.

Using the manufactured cathode and anode and a separator composed of 3 layers of polypropylene/polyethylene/polypropylene (PP/PE/PP), a pouch-type battery was manufactured according to a conventional method. The electrolytes prepared in Examples 1 to 12 and Comparative Examples 1 and 2 were injected into the battery to complete manufacture of a lithium secondary battery.

### Test Examples

The performance of each manufactured secondary battery was evaluated according to the following methods, and the results are shown in Table 1 below.

### [Evaluation of HPPC charging resistance]

HPPC charging resistance was measured according to the method prescribed in the literature "Battery test manual for plug-in hybrid electric vehicles (2010, Idaho National Laboratory for the U.S. Department of Energy.)".

At high temperature (60 °C), a voltage value, a charge/discharge current value corresponding to C-rate, a current change (ΔI), a discharge voltage change (ΔV), a charge voltage change (ΔV), a discharge resistance, and a charging resistance was measured. Then, charge/discharge current for each C-rate was briefly flowed for a certain time, and a resistance value was calculated with a slope value obtained from current and voltage change.

### [Evaluation of high-temperature recovery capacity]

Charging was performed at a constant current of 1.0 C and a voltage of 4.2 V until charging current reached 1/10 C. After charging and discharging was performed by discharging to 3.0 V with a constant current of 1.0 C, discharge capacity was measured.

After charging was performed under the same charging and discharging conditions, the battery was stored in a constant temperature bath at 60 °C for 4 weeks, and then discharged to a discharge voltage of 3 V at a high temperature of 60 °C. Then, the remaining capacity was measured. Thereafter, the above process was repeated three times under the same charge and discharge conditions, and the average value of recovery capacity was calculated.

### [Evaluation of high-temperature lifespan]

The secondary battery was charged with constant current at 45 °C at a current of 1 C rate until voltage reaches 4.20 V (vs. Li), followed by a cut-off at a current of 0.05 C rate while maintaining 4.20 V in a constant voltage mode. Subsequently, discharge was performed with a constant current of 1 C rate until voltage reached 3.0 V (vs. Li) (1st cycle). The cycle was repeated 300 times, and the average value of the obtained values was calculated.

**[Table 1]**

| Classif ication | Chemica 1 Formula of main electro lyte | Content of main electro lyte (wt%) | Chemica 1 Formula of phospha te compoun d | Phospha te content (wt%) | HPPC chargin g resista nce (mΩ) | Recover y capacit y after high tempera ture storage (mAh) | High-tempera ture lifespa n efficie ncy (%) |
|---|---|---|---|---|---|---|---|
| Example 1 | 1A | 0.5 | - | - | 35.8 | 729.6 | 83.9 |
| Example 2 | 1A | 0.5 | 7-5 | 1.0 | 36.5 | 727.2 | 84.1 |
| Example 3 | 2-2 | 0.3 | 7-1 | 1.0 | 36.3 | 732.9 | 83.7 |
| Example 4 | 3-1 | 0.8 | 7-4 | 1.0 | 34.0 | 725.6 | 84.4 |
| Example 5 | 4A | 1.0 | 7-5 | 1.0 | 37.0 | 722.2 | 83.5 |
| Example 6 | 5-52 | 0.5 | 7-4 | 1.0 | 33.0 | 732.5 | 84.5 |
| Example 7 | 5-52 | 1.0 | 7-4 | 1.0 | 34.2 | 735.5 | 85.5 |
| Example 8 | 5-52 | 2.0 | 7-4 | 1.0 | 36.5 | 735.0 | 85.0 |
| Example 9 | 1-24 | 0.5 | - | - | 35.0 | 754.1 | 84.6 |
| Example 10 | 1-24 | 1.0 | - | - | 33.6 | 751.4 | 85.5 |
| Example 11 | 6-31 | 0.5 | - | - | 33.7 | 762.5 | 85.5 |
| Example 12 | 6-31 | 1.0 | - | - | 32.2 | 766.2 | 86.5 |
| Compara tive Example 1 | - | - | 7-5 | 1.0 | 79.6 | 657.9 | 67.6 |
| Compara tive Example 2 | Cyclic ethylen e phospha te | 0.5 | - | - | 68.8 | 661.2 | 71.6 |

As shown in Table 1, the secondary batteries containing the electrolytes of Examples 1 to 12 according to the present invention have a charging resistance value of 32.2 to 37.0 mQ, exhibiting excellent battery performance. On the other hand, Comparative Example 1 using only VC without containing the electrolyte according to the present invention has a high charging resistance value of 79.6 mQ, exhibiting poor battery performance. Comparative Example 2 using only asymmetric cyclic ethylene phosphate without containing the electrolyte according to the present invention has a high charging resistance value of 68.8 mQ, exhibiting poor battery performance. It can be confirmed that the charging resistance value at a high temperature of 60 °C is reduced by up to 60 % by using the compound according to the present invention. These results indicate that the electrolyte according to the present invention has the effect of improving battery output.

As shown in Table 1, the secondary batteries containing the electrolytes of Examples 1 to 12 according to the present invention have a high-temperature recovery capacity of 722.2 to 766.2 mAh. On the other hand, Comparative Examples 1 and 2 outside the conditions of the electrolyte according to the present invention exhibit 657.9 mAh and 661.2 mAh, respectively. A difference of up to 108.3 mAh is shown between the Examples and the Comparative Examples. These results indicate that recovery capacity at a high temperature of 60 °C is improved by the electrolyte according to the present invention. Based on these results, it can be confirmed that the electrolyte additive of the present invention has the effect of improving the recovery capacity efficiency of the battery when stored for a long time in a high temperature environment.

In addition, as a result of evaluating high-temperature lifespan efficiency, the secondary batteries using the electrolytes of Examples 1 to 12 according to the present invention exhibit 83.5 % to 86.5 %. On the other hand, Comparative Examples 1 and 2 outside the conditions of the electrolyte according to the present invention exhibit 67.6 % and 71.6 %, respectively. It can be seen that the high-temperature lifespan efficiency of the Comparative Examples is reduced by up to 28 % point (%p) compared to the Examples of the present invention. These results indicate that, by using the electrolyte of the present invention, the capacity retention rate of the battery was improved during 300 cycles at a high temperature of 45 °C compared to using only the conventional electrolyte. Based on these results, it can be seen that the cycle characteristics and lifespan efficiency of the battery are improved in a high temperature environment by using the electrolyte of the present invention.

In addition, the secondary batteries using the electrolytes of Examples 2 to 8 according to the present invention and further including the phosphate exhibit improved cycle characteristics and lifespan efficiency within an appropriate amount range. At the same time, when mixed with the phosphate, the resistance properties and high-temperature lifespan performance are improved.

In summary, when the electrolyte of the present invention is included in a secondary battery, the charging efficiency, output, recovery capacity, and high-temperature lifespan efficiency of the secondary battery may be improved. Therefore, the secondary battery is suitable for use as a secondary battery for automobiles.

## Claims

1. An electrolyte, comprising one or more selected from among compounds represented by Chemical Formulas 1 to 6 below: 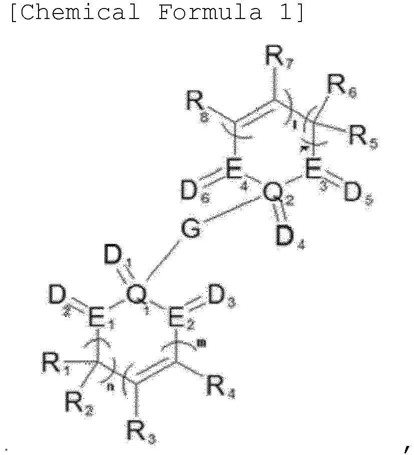 wherein, in Chemical Formula 1, G is -O-, -ORₐ-, -N(R_{b})-, -R_{c}-N(R_{d})-Rₑ-, -R_{f}(NR_{g}Rₕ)-, or -Rᵢ-; Rₐ, R_{c}, Rₑ, R_{f}, and Rᵢ are independently a linear or branched alkylene group having 1 to 10 carbon atoms; R_{b}, R_{d}, R_{g}, and Rₕ are independently hydrogen or a linear or branched alkyl group having 1 to 10 carbon atoms; Q₁ and Q₂ are independently phosphorus (P), sulfur (S), or arsenic (As); D₁, D₂, D₃, D₄, D₅, and D₆ are independently oxygen (=O) or one or two unshared electron pairs; E₁, E₂, E₃, or E₄ is oxygen (O) or carbon (C), wherein, when D₂, D₃, D₅, or D₆ is oxygen (=O), E₁, E₂, E₃, or E₄ bonded thereto is carbon (C); R₁, R₂, R₃, R₄, R₅, R₆, R₇, and R₈ are independently hydrogen, a linear or branched alkyl group having 1 to 10 carbon atoms, an alkenyl group, an alkynyl group, an alkoxy group, an alkoxycarbonyl group, or an alkoxyalkyl group; optionally, R₃ and R₄ or R₇ and R₈ may be bonded to each other to form a ring; n and k are independently integers from 0 to 5; m and 1 are independently 0 or 1; and at least one of n and m and at least one of k and 1 are nonzero. 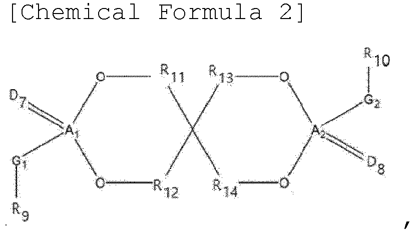 wherein, in Chemical Formula 2, A₁ and A₂ are independently phosphorus (P) or sulfur (S); D₇ and D₈ are independently oxygen (=O) or an unshared electron pair; G₁ and G₂ are independently -O- or -CH₂-; R₉ and R₁₀ are independently a linear or branched alkyl group having 1 to 20 carbon atoms; and R₁₁, R₁₂, R₁₃, and R₁₄ are independently a bond or an alkylene group having 1 to 3 carbon atoms. 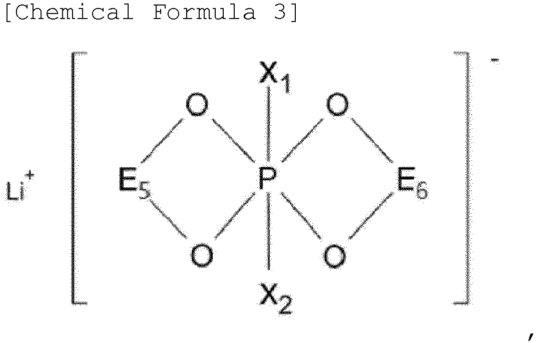 wherein, in Chemical Formula 3, X₁ and X₂ are independently F, Cl, Br, or I; E₅ and E₆ are independently a substituted or unsubstituted hydrocarbon group having 1 to 3 carbon atoms, and the substitution is performed with one or more selected from the group consisting of =O, -CX'₃, and - CH₂CX"₃; X' and X" are independently F, Cl, Br, or I; and bonds between carbons comprised in E₅ and E₆ are single bonds or double bonds. 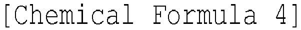 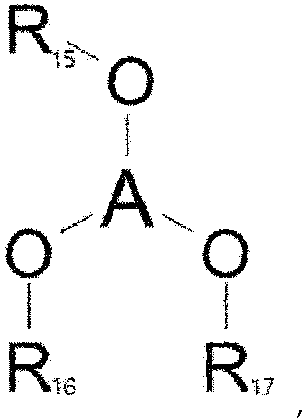 wherein, in Chemical Formula 4, A is phosphorus (P), sulfur (S), or nitrogen (N); and R₁₅, R₁₆, and R₁₇ are independently a linear or branched alkyl group having 1 to 5 carbon atoms comprising substituents, and the substituents comprise one or more selected from the group consisting of halogen elements comprising F, Cl, Br, and I and oxygen (=O). 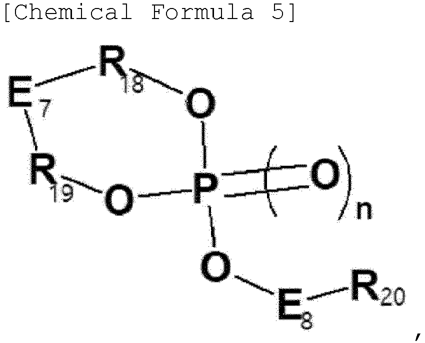 wherein, in Chemical Formula 5, R₁₈ and R₁₉ are independently an alkylene group having 1 to 5 carbon atoms; E₇ is a bond, an alkylene group having 1 to 3 carbon atoms, a cyclic carbonyl group having 2 to 5 carbon atoms, an ether group, or an ester group; R₂₀ is a substituted or unsubstituted linear or cyclic carbonate group having 2 to 5 carbon atoms, a carbonyl group, an ether group, a phosphate group, a sulfonate group, or a sulfate group, and the substitution is performed with one or more selected from the group consisting of F, Cl, Br, and I or an alkenyl group having 1 to 3 carbon atoms; E₈ is a bond, a saturated or unsaturated alkylene group having 1 to 3 carbon atoms, or an ether group; and n is 0 or 1. 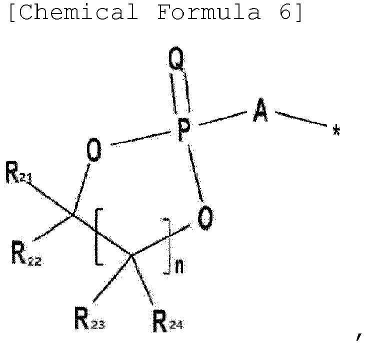 wherein, in Chemical Formula 6, P and O are phosphorus and oxygen, respectively; A is a bond or oxygen; Q is oxygen or an unshared electron pair; R₂₁, R₂₂, R₂₂, and R₂₄ are independently hydrogen, a linear or branched alkyl group having 1 to 10 carbon atoms, an alkenyl group, an alkynyl group, an alkoxy group, an alkoxycarbonyl group, an alkoxyalkyl group, fluoroalkyl, or 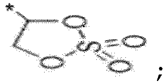 optionally, R₂₁ or R₂₂ is bonded to R₂₃ or R₂₄ to form a double bond or ring; n is an integer from 0 to 3; and * is a bond position.

2. The electrolyte according to claim 1, wherein, based on a total weight of the electrolyte, the electrolyte comprises 0.1 to 10 % by weight of one or more selected from among the compounds represented by Chemical Formulas 1 to 6.

3. The electrolyte according to claim 1, wherein the electrolyte is a liquid electrolyte, a semi-solid electrolyte, or a solid electrolyte.

4. The electrolyte according to claim 1, wherein one or more selected from among the compounds represented by Chemical Formulas 1 to 6 comprise a compound represented by Chemical Formula 5-52 below:

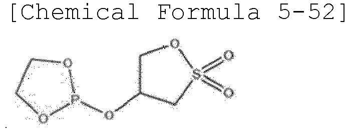

5. The electrolyte according to claim 1, wherein the compound represented by Chemical Formula 1 comprises one or more selected from the group consisting of compounds represented by Chemical Formulas 1-1 to 1-24 below: 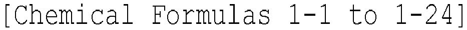 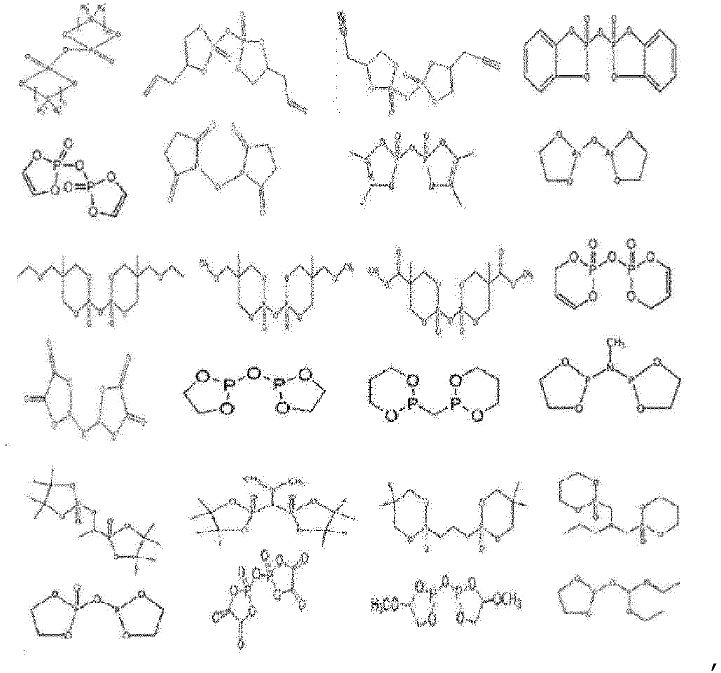
wherein, in Chemical Formula 1-1, A₁ and A₂ are each independently phosphorus or sulfur; R₁', R₂', R₃', and R₄' are each independently hydrogen or a substituted or unsubstituted alkyl group having 1 to 10 carbon atoms; and m and n are each independently an integer from 1 to 5, and
in Chemical Formulas 1-2 to 1-24, a line is a bond; carbon is located at a point where no separate element is shown and bonds meet; and the number of hydrogens satisfying a valence of the carbon is omitted.

6. The electrolyte according to claim 1, wherein the compound represented by Chemical Formula 2 comprises one or more selected from the group consisting of compounds represented by Chemical Formulas 2-1 to 2-4 below: 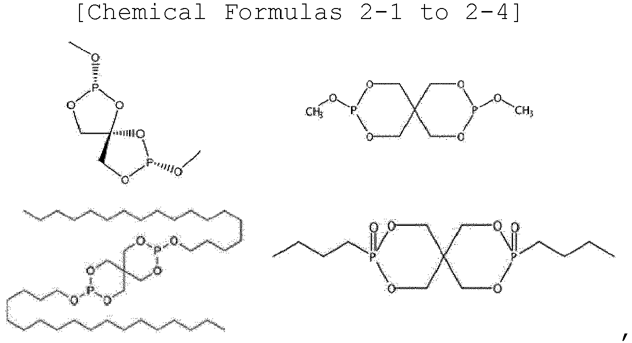 wherein, in Chemical Formulas 2-1 to 2-4, a line is a bond; when no separate element is shown, carbon is located at a point where bonds meet; and the number of hydrogens satisfying a valence of the carbon is omitted.

7. The electrolyte according to claim 1, wherein the compound represented by Chemical Formula 3 comprises one or more selected from the group consisting of compounds represented by Chemical Formulas 3-1 and 3-2 below: 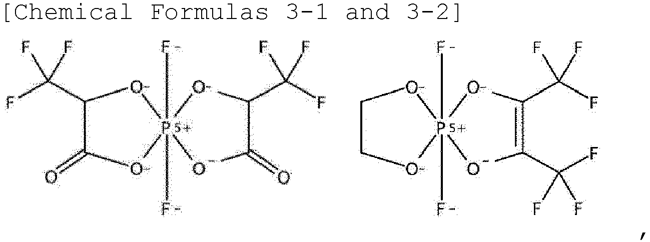 wherein, in Chemical Formulas 3-1 and 3-2, a line is a bond; when no separate element is shown, carbon is located at a point where bonds meet; and the number of hydrogens satisfying a valence of the carbon is omitted.

8. The electrolyte according to claim 1, wherein the compound represented by Chemical Formula 4 is a compound represented by Chemical Formula 4A below: 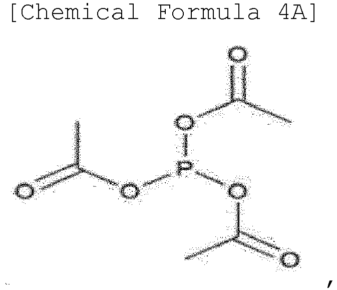 wherein, in Chemical Formula 4A, a line is a bond; when no separate element is shown, carbon is located at a point where bonds meet; and the number of hydrogens satisfying a valence of the carbon is omitted.

9. The electrolyte according to claim 1, wherein the compound represented by Chemical Formula 5 comprises one or more selected from the group consisting of compounds represented by Chemical Formulas 5-1 to 5-52 below: 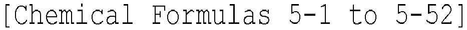 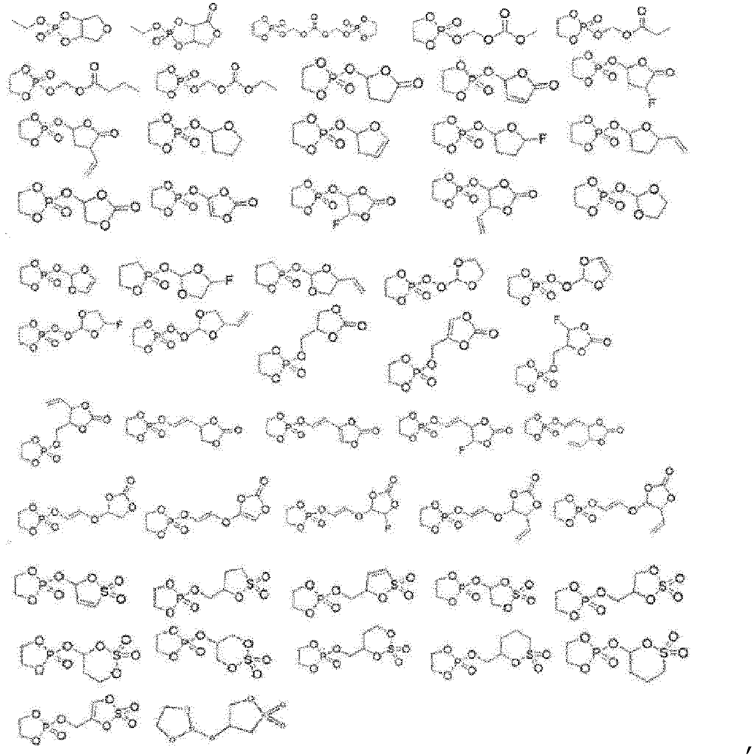 wherein, in Chemical Formulas 5-1 to 5-52, a line is a bond; when no separate element is shown, carbon is located at a point where bonds meet; and the number of hydrogens satisfying a valence of the carbon is omitted.

10. The electrolyte according to claim 1, wherein the compound represented by Chemical Formula 6 comprises one or more selected from the group consisting of compounds represented by Chemical Formulas 6-1 to 6-31 below: 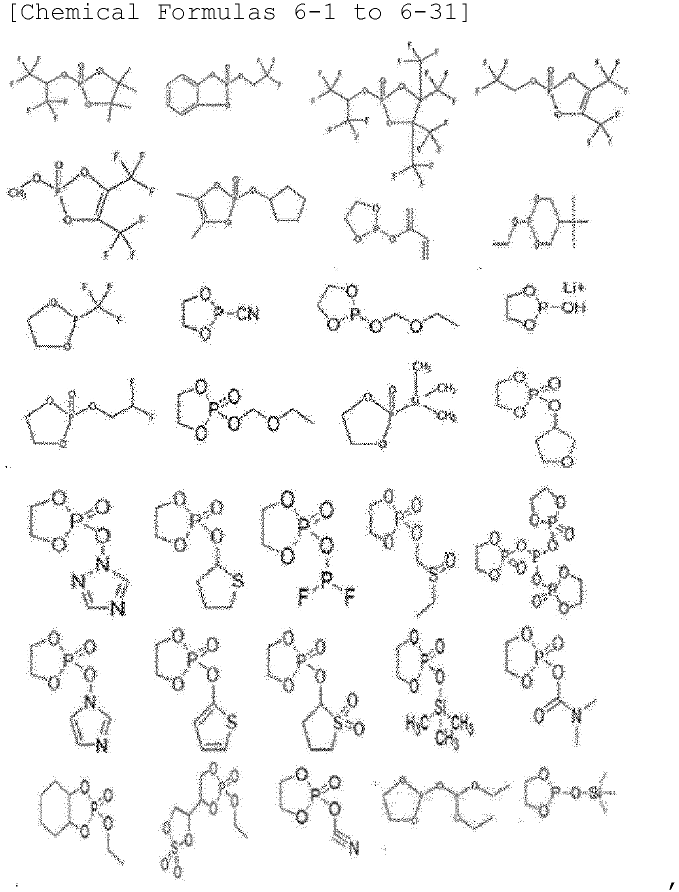 wherein, in Chemical Formulas 6-1 to 6-31, a line is a bond; when no separate element is shown, carbon is located at a point where bonds meet; and the number of hydrogens satisfying a valence of the carbon is omitted.

11. The electrolyte according to claim 1, wherein, based on 100 % by weight in total of the electrolyte, the electrolyte further comprises 0.1 to 10 % by weight of a phosphate compound.

12. The electrolyte according to claim 11, wherein the phosphate compound comprises one or more selected from the group consisting of compounds represented by Chemical Formulas 7-1 to 7-7 below: 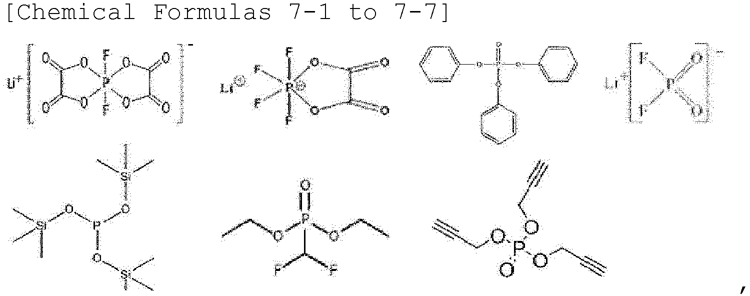 wherein, in Chemical Formulas 7-1 to 7-7, a line is a bond; carbon is located at a point where no separate element is shown and bonds meet; and the number of hydrogens satisfying a valence of the carbon is omitted.

13. The electrolyte according to claim 1, wherein the electrolyte comprises organic solvents.

14. The electrolyte according to claim 13, wherein the organic solvents comprise one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP).

15. The electrolyte according to claim 1, wherein the electrolyte comprises lithium salt.

16. The electrolyte according to claim 15, wherein the lithium salt comprises one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, (CF₃SO₂)(C₂F₅SO₂)NLi, (SO₂F)₂NLi, and (CF₃SO₂)₂NLi.

17. The electrolyte according to claim 16, wherein, based on 100 mol% in total of the electrolyte, the electrolyte comprises 0.6 to 2 mol% of the lithium salt.

18. A secondary battery, comprising an anode, a cathode, and an electrolyte, wherein the electrolyte is the electrolyte according to any one of claims 1 to 17.

19. The secondary battery according to claim 18, wherein the secondary battery is a battery for automobiles.
